# FASCICULE DE BREVET EUROPEEN

(11) **EP 3 545 496 B1**
(45) Date de publication et mention de la délivrance du brevet: **30.12.2020**
(21) Numéro de dépôt: 17816923.1
(22) Date de dépôt: 23.11.2017
(51) Int. Cl.: G06T 7/42, G06T 7/46

(54) **PROCÉDÉ DE CARACTERISATION DE L'ANISOTROPIE DE LA TEXTURE D'UNE IMAGE NUMÉRIQUE**
VERFAHREN ZUR CHARAKTERISIERUNG DER ANISOTROPIE DER TEXTUR EINES DIGITALEN BILDES
METHOD FOR CHARACTERISING THE ANISOTROPY OF THE TEXTURE OF A DIGITAL IMAGE

(30) Priorité: 24.11.2016 FR 1661425
(43) Date de publication de la demande: 02.10.2019
(73) Titulaire: Université d'Aix Marseille, 13007 Marseille 7 (FR); Centre National de la Recherche Scientifique, 75016 Paris (FR)
(72) Inventeur: RICHARD, Frédéric, 13012 Marseille (FR)
(74) Mandataire: Colombo, Michel
(86) Numéro de dépôt international: PCT/FR2017/053241
(87) Numéro de publication internationale: WO 2018/096288

(56) Documents cités:
- FRÉDÉRIC J.P. RICHARD: "Some anisotropy indices for the characterization of Brownian textures and their application to breast images", SPATIAL STATISTICS, vol. 18, 17 février 2016 (2016-02-17), pages 147-162, XP055376264, ISSN: 2211-6753, DOI: 10.1016/j.spasta.2016.02.001 cité dans la demande
- F.J.P. RICHARD: "Analysis of Anisotropic Brownian Textures and Application to Lesion Detection in Mammograms", PROCEDIA ENVIRONMENTAL SCIENCES, vol. 27, 14 août 2015 (2015-08-14), pages 16-20, XP029259764, ISSN: 1878-0296, DOI: 10.1016/J.PROENV.2015.07.100
- FRÉDÉRIC J.P. RICHARD: "Tests of isotropy for rough textures of trended images", STATISTICA SINICA, vol. 26, no. 3, 1 juillet 2016 (2016-07-01), pages 1-32, XP055376259, ISSN: 1017-0405, DOI: 10.5705/ss.202014.0077

## Description

L'invention concerne un procédé de caractérisation de l'anisotropie de la texture d'une image numérique. L'invention concerne également un procédé pour classer des images numériques selon l'anisotropie de leur texture. L'invention concerne enfin un support d'enregistrement d'informations et un calculateur électronique pour mettre en œuvre ces procédés.

La demande WO2016/042269A1 décrit un procédé qui permet d'estimer l'exposant H de Hurst de la texture d'une image et des termes βⱼ qui varient en fonction des caractéristiques de la texture de cette image dans une direction particulière correspondant à un angle αⱼ. Ce procédé fonctionne très bien pour identifier l'anisotropie d'une image.

Il a également été proposé de construire un indice A qui caractérise l'anisotropie de la texture de l'image à partir des termes βᵢ. Cet indice est appelé « indice d'anisotropie ». Par exemple, le calcul d'un indice A d'anisotropie à partir des termes βⱼ est décrit dans les articles suivants :
- F.J.P Richard : « Analysis of anisotropic brownian textures and application to lesion detection in mammograms », Procedia Environmental Sciences 27 (2015) 16 - 20, 2015,
- F.J.P Richard : « Anisotropy indices for the characterization of brownian textures and their application for breast images », 2016
- F.J.P Richard : « Some anisotropy indices for the characterization of Brownian texture and their application to breast images », SPATIAL STATISTICS, vol. 18, 17/02/2016, pages 147-162,
- F.J.P Richard: «Tests of isotropy for rough textures of trended images », STATISTICA SINICA, vol. 26, n°3, 1/7/2016, pages 1-32.

Dans ces articles, l'indice A est fonction de la moyenne des termes βⱼ. Pour un angle αⱼ donné, le terme βⱼ varie en fonction des caractéristiques de la texture dans cette direction donnée mais aussi en fonction de l'exposant H de Hurst. On rappelle que l'exposant H de Hurst est une caractéristique globale de la texture qui est indépendante de l'orientation de l'image. Ainsi, quand une variation du terme βⱼ est observée, il n'est pas possible de savoir simplement si cette variation est due à une modification de l'anisotropie de l'image ou à une modification de la texture dans son ensemble et donc de l'exposant H de Hurst. Dès lors, cet indice A varie aussi bien en fonction l'anisotropie de la texture de l'image qu'en fonction de l'exposant H de Hurst de la texture de cette image.

L'invention vise à proposer un procédé de caractérisation de l'anisotropie d'une image à l'aide d'un indice d'anisotropie qui varie en fonction de l'anisotropie de la texture tout en étant beaucoup moins sensible aux variations de l'exposant H de Hurst de cette même texture. Elle a donc pour objet un tel procédé conforme à la revendication 1.

Le procédé revendiqué estime à partir des termes βⱼ, les coefficients d'une fonction τ(θ), appelée ici fonction de topothésie asymptotique. Cette fonction τ(θ) présente la particularité de retourner une valeur qui caractérise la texture de l'image dans la direction θ tout en étant quasiment totalement indépendante de la valeur de l'exposant H de Hurst associé à cette même texture. Dès lors, la construction de l'indice d'anisotropie qui varie de façon monotone en fonction de la dispersion statistique de la fonction τ(θ) permet d'obtenir un indice qui varie en fonction de l'anisotropie de la texture tout en étant pratiquement indépendant de la valeur de l'exposant H de Hurst de cette même texture.

Les modes de réalisation de ce procédé peuvent présenter une ou plusieurs des caractéristiques des revendications dépendantes.

Ces modes de réalisation du procédé de caractérisation présentent en outre les avantages suivants :
- Le calcul de l'estimation des coefficients scalaires de la fonction τ(θ) grâce à une relation linéaire entre ces coefficients à estimer et les termes βⱼ accélère de façon très importante l'exécution du procédé de caractérisation.
- Le fait de calculer la valeur optimale du paramètre λ permet d'améliorer l'estimation des coefficients scalaires de la fonction τ(θ) et donc d'obtenir un indice qui est encore moins sensible vis-à-vis des variations de l'indice H de Hurst.

L'invention a également pour objet un procédé de classement automatique d'images numériques en fonction de l'anisotropie de leur texture.

L'invention concerne également un support d'enregistrement d'informations, comportant des instructions pour la réalisation du procédé revendiqué, lorsque ces instructions sont exécutées par un calculateur électronique.

L'invention concerne également un calculateur électronique pour la mise en œuvre du procédé revendiqué.

L'invention sera mieux comprise à la lecture de la description qui va suivre, donnée uniquement à titre d'exemple non limitatif et faite en se référant aux dessins sur lesquels :
- les figures 1A à 1D sont des illustrations schématiques d'images numériques présentant des textures isotropes et anisotropes ;
- la figure 2 est une illustration schématique d'un dispositif de calcul pour caractériser automatiquement l'anisotropie d'une image numérique ;
- la figure 3 est un ordinogramme d'un procédé de caractérisation de l'anisotropie de la texture d'une image numérique ;
- la figure 4 est un ordinogramme d'un procédé de classement automatique d'images en fonction de l'anisotropie de leur texture,
- les figures 5A à 5F sont des illustrations d'images numériques de la texture de différents types de papier,
- la figure 6 est un graphe représentant la répartition de la texture de différents papiers en fonction de leur exposant de Hurst et de leur indice d'an isotropie.

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description, les conventions de notations mathématiques suivantes sont adoptées, sauf mentions contraires :
- l'intervalle [X,Y] désigne l'intervalle de tous les nombres entiers supérieurs ou égaux à X et inférieurs ou égaux à Y, où X et Y sont eux-mêmes des entiers ;
- un vecteur A dans un espace à d dimensions (tel que 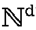 ) a pour coordonnées A₁, A₂, ..., A_{d} ;
- [0, X]^{d} désigne le produit [0,X₁]x[0,X₂]x...x[0,X_{d}] où X est un vecteur de 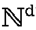 de coordonnées X₁, X₂, .... X_{d}, de telle sorte que la i-ième coordonnée Uᵢ d'un vecteur U de [0, X]^{d} appartient à l'intervalle [0,Xᵢ], où i est un indice supérieur ou égal à 0 et inférieur ou égal à d ;
- |X| est la somme des composantes du vecteur X, telle que |X| = |X₁| + |X₂| + ... + | X_{d}|;
- |X|² est la norme euclidienne au carré du vecteur X, telle que |X|² = (X₁² + X₂² + ... + X_{d}²).

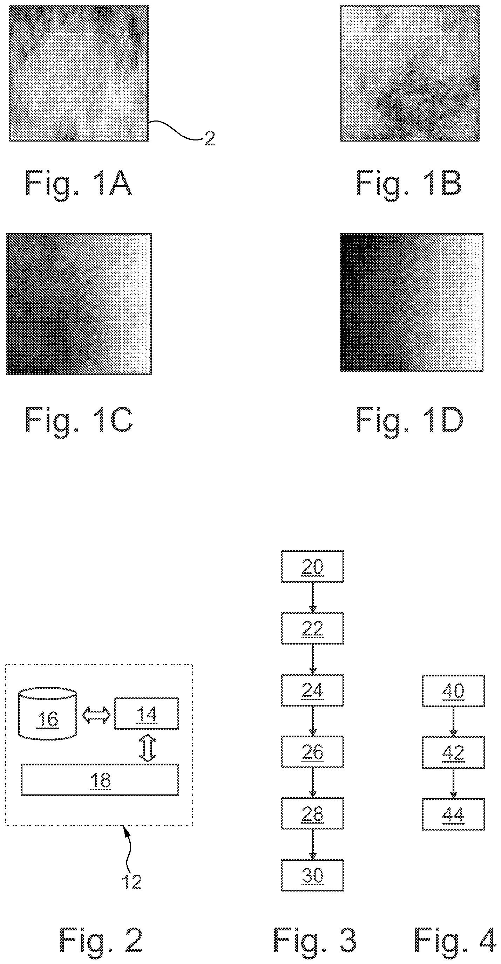

La figure 1A représente une image numérique 2 dont la texture présente une anisotropie.

Dans cette description, l'anisotropie s'entend comme étant le fait que les propriétés de la texture de l'image ne sont pas les mêmes selon la direction dans laquelle elles sont observées.

La texture d'une image numérique est généralement définie comme se rapportant à la distribution spatiale de variations d'intensité et/ou de variations tonales des pixels formant l'image numérique. La texture est une manifestation de la régularité holdérienne de l'image. Les notions de texture sont, par exemple, définies :
- dans l'ouvrage « Handbook of Texture Analysis », M. Mirmehdi et al., eds., World Scientific, oct. 2008 au chapitre « Introduction to Texture Analysis » de E.R. Davies, ou encore :
- à la section « I. Introduction » de l'article de Robert M. Haralick et al ; « Textural features for image classification » ; IEEE Transactions on Systems, Man and Cybernetics ; vol. SMC-3, n°6, p. 610-621, novembre 1973.

L'anisotropie d'une image peut provenir de deux facteurs : la texture et la « tendance ». Typiquement, la texture correspond aux variations d'intensité des pixels à courte portée (c'est-à-dire à haute fréquence) alors que la tendance se rapporte à des variations d'intensité des pixels à plus longue portée (c'est-à-dire à basse fréquence).

Ici, c'est la texture, et surtout son anisotropie, qui présentent un intérêt pour caractériser l'image 2. Par exemple, lorsque l'image 2 représente un tissu biologique, le caractère anisotrope de la texture de l'image peut donner un indice sur la présence ou le risque de développement de cellules cancéreuses au sein de ce tissu. Dans cet exemple, l'image 2 est un cliché de mammographie.

Les figures 1B à 1D illustrent d'autres exemples d'images susceptibles de correspondre à un cliché de mammographie. La figure 1B représente une image dont la texture est isotrope. Les figures 1C et 1D représentent, respectivement, des images dont la texture est isotrope et anisotrope et qui comportent chacune une anisotropie causée par une tendance polynomiale d'ordre deux. Cette tendance est orientée suivant la direction horizontale de ces images.

L'image 2 est formée d'une pluralité de pixels. Chaque pixel est associé à :
- une valeur d'intensité de pixel, et à
- une position p dans l'espace 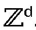 .
où d est un entier naturel supérieur ou égal à deux qui représente la dimension de l'image 2. Ici, dans cet exemple, d = 2.

Ainsi, les pixels de l'image 2 sont disposés dans l'espace à la manière d'une matrice (« lattice » en langue anglaise) dans l'espace 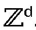 . De préférence, la résolution de l'image est la même selon tous les d axes de l'image. Par la suite, l'ensemble des positions possibles des pixels de l'image 2 est noté [0, N]^{d}, où N est un vecteur qui code la taille de l'image et dont les composantes sont des entiers naturels strictement positifs appartenant à 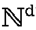 . Cette notation signifie que les coordonnées p₁, p₂, ..., p_{d} de la position p d'un pixel de l'image appartiennent, respectivement, aux ensemble [0,N₁], [0, N₂], ..., [0, N_{d}], où N₁, N₂, ... , N_{d} sont les coordonnées de N. Ici, l'image 2 présente une forme carrée de dimension (N₁+1)^{∗}(N₂+1), où N₁+1 = N₂+1 et N₁+1 est la longueur d'un côté de ce carré exprimé en nombre de pixel. Par exemple, l'image 2 est une zone d'intérêt extraite à partir d'une image de dimension plus étendue. Les côtés de l'image 2 présentent une longueur supérieure ou égale à 50 pixels ou à 100 pixels ou à 500 pixels.

Dans cet exemple, l'intensité lumineuse des pixels est encodée en niveaux de gris, par exemple, sur 8 bits. Les valeurs d'intensité de pixel sont des nombres entiers appartenant à l'intervalle [0,255].

La figure 2 représente un dispositif 12 pour identifier et caractériser l'anisotropie de la texture de l'image 2. Le dispositif 12 est apte, pour une image 2 donnée, à indiquer si l'image est isotrope ou anisotrope et, avantageusement, dans ce dernier cas, à quantifier, c'est-à-dire caractériser, l'ampleur de l'anisotropie.

Le dispositif 12 comporte à cet effet :
- un calculateur 14 électronique programmable, tel qu'un microprocesseur,
- un support 16 d'enregistrement d'informations, tel qu'une mémoire,
- une interface 18 d'acquisition d'une image numérique.

L'interface 18 permet l'acquisition de l'image 2. Typiquement, l'image numérique est générée par un appareil électronique de prise d'images comme un appareil de radiographie. Le calculateur 14 exécute les instructions enregistrées dans le support 16. Le support 16 comporte notamment des instructions pour mettre en œuvre le procédé des figures 3 et 4 qui sera décrit plus en détail dans ce qui suit.

L'identification et la caractérisation de l'anisotropie de l'image 2 se fait à l'aide d'un certain nombre d'opérations.

Dans cet exemple, l'image 2 est modélisée comme étant la réalisation statistique d'un champ gaussien aléatoire intrinsèque (« Intrisic random gaussian field » en langue anglaise). Autrement dit, la valeur d'intensité associée à chaque pixel de l'image 2 est dite correspondre à la réalisation d'une variable aléatoire gaussienne Z. La notion de champ gaussien aléatoire intrinsèque est définie plus en détail dans l'ouvrage suivant : J. P. Chilès et al. « Geostatistics : Modeling Spatial Uncertainty », J. Wiley, 2e édition, 2012.

On note Z[p] la valeur d'intensité associée au pixel dont la position dans l'image 2 est donnée par la position p. Par exemple, on définit un repère orthonormé dans 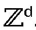 ayant pour origine le vecteur nul (0)^{d}. La position p appartient à 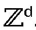 .

Un exemple de mise en œuvre du procédé automatique de caractérisation de l'anisotropie de la texture va maintenant être décrite en référence à l'ordinogramme de la figure 3 est à l'aide des figures 1 et 2.

Lors d'une étape 20, l'image 2 est automatiquement acquise par l'interface 18 et enregistrée, par exemple, dans le support 16. On désignera par la suite cette image 2 par la notation « I ».

Dans cet exemple, en dimension d = 2, l'image 2 normalisée est modélisée par une matrice carrée Z de dimensions (N₁+1)^{∗}(N₂+1). Les coefficients de cette matrice Z sont les Z[p] correspondant à l'intensité des pixels de position p. Les composantes du vecteur p donnent la position de ce coefficient dans la matrice Z. Par exemple, Z[p] est le coefficient de la p₁-ième ligne et de la p₂-ième colonne de Z, où p₁ et p2 sont les coordonnées de la position p dans [0, N]².

Puis, lors d'une étape 22, des transformations géométriques de l'image 2 sont appliquées pour obtenir une série d'images transformées I_{j,k}. Ces transformations comportent des modifications T_{j,k}, de l'image 2 qui incluent chacune :
- une rotation d'un angle αⱼ, et
- un changement d'échelle (« scaling » en langue anglaise) d'un facteur d'échelle γₖ.

Par la suite, on note T_{j,k}(I) l'image obtenue après l'application de la modification T_{j,k} à l'image I acquise.

Chaque modification T_{j,k} est caractérisée de façon unique par un vecteur uⱼₖ de l'espace 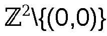 , de telle sorte que αⱼ = arg(uⱼₖ) et γₖ = |uⱼₖ|². L'espace 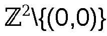 est l'espace 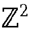 privé du point de coordonnées (0,0).

Les indices « j » et « k » sont des indices entiers qui identifient respectivement et de façon unique l'angle αⱼ est le facteur γₖ. L'indice j varie entre 1 et nⱼ. Pour simplifier la notation, on parlera dans ce qui suit de «rotation j» et de «changement d'échelle k» en référence, respectivement, à la rotation d'angle αⱼ et au changement d'échelle de facteur γₖ.

La rotation j fait tourner de l'angle αⱼ chacun des pixels de l'image 2 depuis une position de départ vers une position d'arrivée autour d'un même point ou d'un même axe prédéterminé. Typiquement ce point ou cet axe de rotation passe par le centre géométrique de l'image. La rotation s'effectue ici par rapport au centre géométrique de l'image. Le centre géométrique d'une image numérique est défini comme étant le barycentre des positions de l'ensemble des pixels de l'image, pondéré chacune par un coefficient de même valeur.

Le changement d'échelle k agrandit ou réduit l'image par une homothétie de facteur γₖ. Dans les exemples qui suivent, le centre de l'homothétie est le centre géométrique de l'image.

Ces modifications T_{j,k} sont appliquées pour au moins deux et, de préférence au moins trois ou quatre angles αⱼ de valeurs différentes. Avantageusement, les différentes valeurs des angles αⱼ sont réparties le plus uniformément possible entre 0° et 180° tout en respectant la contrainte que le vecteur uⱼₖ doit appartenir à l'espace 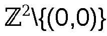 . Le nombre nⱼ de valeurs différentes pour l'angle αⱼ est généralement choisi pas trop grand pour limiter le nombre de calcul à réaliser. Par exemple, ce nombre nⱼ est choisi inférieur à 150 ou 100. Un bon compromis consiste à choisir au moins quatre valeurs différentes pour l'angle αⱼ et, de préférence, au moins dix ou vingt valeurs différentes. Pour chaque angle αⱼ, des modifications T_{j,k} sont appliquées pour au moins deux et, de préférence au moins trois ou quatre ou cinq, changements d'échelle γₖ différents.

Les valeurs du facteur γₖ sont par exemple supérieures ou égales à 1 et inférieures ou égales à 10² ou à 8² ou à 4². De préférence, les différentes valeurs du facteur γₖ sont réparties de façon aussi uniforme que possible sur l'intervalle de valeurs choisi. Par exemple, ici, les changements d'échelle γₖ utilisés sont tous ceux pour lesquels la condition suivante est satisfaite : la norme euclidienne du vecteur uⱼₖ appartient à l'intervalle [√2 ; 10].

Par exemple, les angles αⱼ de rotation sont choisis en fonction des directions horizontales et verticales de l'image 2. Par exemple, pour faire deux rotations j1 et j2, on choisit des valeurs αⱼ₁ = 90° et αⱼ₂ = 180°, où j1 et j2 sont des valeurs particulières de l'indice j. Les angles sont ici exprimés par rapport à l'axe horizontal de l'image 2.

Dans cet exemple, en dimension d = 2, les modifications T_{j,k} appliquées sont les suivantes, exprimées ici sous forme matricielle : ${T}_{j , k} = {γ}_{k} \left[\begin{matrix}cos \left({α}_{j}\right) & - sin \left({α}_{j}\right) \\ sin \left({α}_{j}\right) & cos \left({α}_{j}\right)\end{matrix}\right]$

Lors de l'étape 22, on calcule des K-incréments pour chacune des images transformées T_{j,k}(I). Ce calcul comporte un filtrage destiné à éliminer les tendances de forme polynomiale d'ordre strictement inférieur à K. Plus précisément, pour chaque image T_{j,k}(I), on applique un filtre permettant de calculer le K-incrément V_{j,k} de cette image T_{j,k}(I). C'est le K-incrément de cette image T_{j,k}(I) qui constitue l'image transformée I_{j,k}. Le K-incrément V_{j,k} de cette image n'est pas calculé pour tous les points de l'image T_{j,k}(I), mais seulement pour certains d'entre eux, comme on le verra plus loin.

La notion de K-increment est par exemple définie plus en détails dans l'ouvrage suivant : J. P. Chilès et al. « Geostatistics : Modeling Spatial Uncertainty », J. Wiley, 2e édition, 2012.

Ici, le filtrage est réalisé au moyen d'un noyau de convolution (« convolution kernel » en langue anglaise) noté « v », pour assurer un filtrage linéaire. Par la suite, on parlera de « filtre v » pour désigner ce noyau de convolution.

Le filtre v est défini sur l'ensemble [0,L]^{d}. Ce filtre v est caractérisé par un polynôme caractéristique Qᵥ(z) défini par : $∀ z ∈ {ℝ}^{d} , {Q}_{v} \left(z\right) = {\sum }_{p ∈ {\left[0, L\right]}^{d}} v \left[p\right] {z}^{p}$

Ici, le filtre v désigne une matrice et la quantité v[p] désigne une valeur scalaire particulière de ce filtre pour la position p, où p est un vecteur de [0,L]^{d}. Cette valeur v[p] est nulle si le vecteur p n'appartient pas à [0,L]^{d}. De façon équivalente, on dit aussi que le filtre v présente un support borné sur [0,L]^{d}. Ce filtre v est distinct de la fonction nulle qui, pour toute valeur du vecteur p présente une valeur v[p] nulle. La notation z^{p} désigne ici le monôme z₁^{p1}* z₂^{p2}*...*Z_{d}^{pd}.

Le filtre v est ainsi paramétré par le vecteur L qui est un vecteur de [0,N]^{d}. De façon générale, le vecteur L est choisi de sorte à être contenu dans l'image I. On prend donc de préférence des valeurs de L qui satisfont, pour tout i allant de 1 à d, à la relation Lᵢ << Nᵢ, c'est-à-dire que Lᵢ est inférieur à 10 fois ou à 100 fois Nᵢ.

De surcroît, le filtre v est tel que son polynôme caractéristique Qᵥ(z) satisfait la condition suivante : 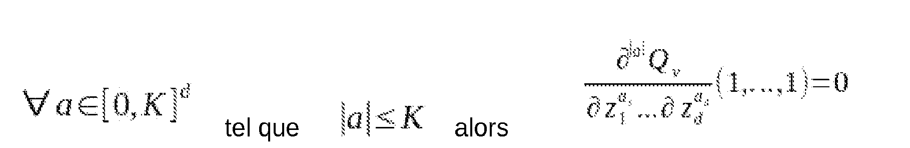 où la constante K est un entier naturel non nul et ∂^{|a|}Qᵥ/∂z₁^{a1}...∂z_{d}^{ad} est la dérivée partielle du polynôme Qᵥ(z) par rapport aux composantes du vecteur z, le symbole ∂zi^{ai} indiquant une différentiation du polynôme Qᵥ(z) d'ordre aᵢ par rapport à la variable zᵢ, où zᵢ désigne la i-ième composante du vecteur z et aᵢ la i-ième composante du vecteur a, i étant un indice entier supérieur ou égal à 0 et inférieur ou égal à d.

Le filtrage de l'image T_{j,k}(I) par le filtre v permet d'éliminer l'effet de la « tendance » sur les calculs ultérieurs du procédé lorsque celle-ci présente une forme polynomiale d'ordre P_{O}, à condition que la valeur de la constante K soit choisie comme suit :
- K ≥ P_{O} + 1 si d est inférieur ou égal à 4, et
- K ≥ P_{O}/2 + d/4 si d > 4.

Les K-incréments de l'image T_{j,k}(I), notés V_{j,k}, sont alors calculés grâce au filtre v comme suit : ${V}_{j , k} \left[m\right] = {\sum }_{p ∈ {\left[0, L\right]}^{d}} v \left[p\right] ⋅ Z \left[m-{T}_{j , k}⋅p\right]$ où :
- V_{j,k}[m] est un K-incrément calculé sur l'image T_{j,k}(I) pour le pixel de position m, avec m un vecteur appartenant à un ensemble E qui sera défini dans ce qui suit ;
- le produit T_{j,k}.p correspond à l'application de la modification T_{j,k} au pixel de position p de l'image I et exprime les coordonnées dans 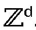 , après application de la modification T_{j,k}, du pixel qui avait initialement la position p dans l'image I,
- v[p] est la valeur du filtre v pour la valeur de p.

Pour chaque image T_{j,k}(I), le calcul du K-incrément est réalisé uniquement sur les pixels de l'image T_{j,k}(I) dont les positions appartiennent à un ensemble E. L'ensemble E contient seulement des positions :
- qui appartiennent à l'image I, et
- qui, quelle que soit la modification T_{j,k} appliquée, occupent une position qui existe déjà dans l'image I après application de cette modification T_{j,k}.

En outre, pour toute position m appartenant à E, les pixels de position « m - T_{j,k}.p » occupent une position contenue dans l'image I.

On note nE le nombre des positions qui appartiennent à l'ensemble E.

Ainsi, le calcul des variations quadratiques est réalisé uniquement sur les points de l'image transformée pour lequel aucune interpolation n'est nécessaire. On peut ainsi avoir recours à des rotations j suivant n'importe quel angle, au contraire de ce qui se passe avec les projections. En effet, si une projection est réalisée suivant une direction par exemple diagonale de l'image, des points projetés ont une position qui n'appartient pas à l'ensemble [0,N]^{d}. Autrement dit, ils ne font plus partie de la matrice. Il faut donc avoir recours à une interpolation pour déterminer la valeur d'intensité associée à des points qui eux appartiennent à cette matrice. Cela introduit une approximation et donc une erreur. Avec les modifications T_{j,k} puis la sélection des points de l'ensemble E, la fiabilité du procédé est améliorée.

Dans cet exemple, le filtrage est effectué au sein de la même formule que l'application des modifications T_{j,k}.

Avec ce choix de la constante K, le filtrage produit les incréments V_{j,k}[m] d'ordre K. Ce filtrage permet de ne pas tenir compte d'une anisotropie de l'image qui serait causée par la tendance, mais seulement de l'anisotropie de la texture de l'image sous-jacente. Il en résulte une meilleure fiabilité du procédé de caractérisation.

La constante K doit donc être choisie comme décrit précédemment en fonction de la nature de la tendance présente dans l'image 2. Typiquement, dans le cas d'un cliché de mammographie, le degré polynomial P_{O} de la tendance est inférieur ou égal à deux. Par exemple, une valeur est sélectionnée par un utilisateur du procédé. À cet effet, l'étape 22 comporte ici l'acquisition d'une valeur du vecteur L ainsi que d'une valeur de la constante K.

Dans cet exemple, le filtre v est choisi comme suit : $v \left[p\right] = {\left(-1\right)}^{\left|p\right|} \times {C}_{{L}_{1}}^{{p}_{1}} \times … \times {C}_{{L}_{d}}^{{p}_{d}} = {\left(-1\right)}^{\left|p\right|} \times {\prod }_{i = 1}^{d} \frac{{L}_{i} !}{{p}_{i} ! \times \left({L}_{i}-{p}_{i}\right) !}$ si le vecteur p appartient à [0,L]^{d} et v[p] = 0 sinon, où les termes C^{p}_{L} désignent des coefficients binomiaux.

Avec ce filtre particulier, la condition précédemment exprimée sur le polynôme caractéristique Qᵥ(z) est satisfaite si K = |L| - 1. Aussi, la valeur de K se déduit de la valeur du paramètre L qui a été acquise.

Alors, dans ce cas particulier, le filtrage de l'image T_{j,k}(I) par le filtre v permet d'éliminer l'effet de la « tendance » lorsque celle-ci présente une forme polynomiale d'ordre P_{O}, à condition que le paramètre L soit choisit comme suit :
- |L| = P_{O} + 2 si d inférieur ou égal à 4, et
- |L| = P_{O}/2 + d/4 + 1 si d > 4.

Dans cet exemple, en dimension d = 2, le vecteur L a deux composantes, L₁ et L₂. Pour éliminer une tendance de degré polynomial P_{O}=2, il faut choisir L₁ et L2 tels que |L| soit égal à quatre. On choisit de préférence L₁=4 et L₂=0. En effet, en choisissant des valeurs pour les coordonnées du vecteur « L » suffisamment éloignées les unes des autres, le filtre présente une plus grande sensibilité directionnelle. Ainsi, il réagira de façon plus marquée, donc filtrera plus efficacement, des variations qui sont orientées selon une direction particulière. Au contraire, un filtre pour lequel on choisirait L₁=2 et L₂=2 serait moins sensible à un signal directionnel et présenterait une efficacité moindre.

Dans ce mode de réalisation, le filtre v est défini par la relation suivante : $v \left[p\right] = {\left(-1\right)}^{{p}_{1}} \frac{{L}_{1} !}{{p}_{1} ! \left({L}_{1}-{p}_{1}\right) !}$ (1) si le vecteur p appartient à [0,L]x{0} et sinon v[p] = 0, où L₁ appartient à 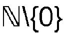 . Ici, L₁=4. Dans ces conditions, l'ordre du noyau v est égal à K = L₁-1.

Lors de cette étape 22, pour chaque valeur différente de j et k, le calculateur 14 réalise successivement les opérations suivantes :
- application de la modification T_{j,k} à l'image 2 pour obtenir l'image T_{j,k}(I), puis
- application du filtre v à l'image T_{j,k}(I) pour obtenir l'image transformée I_{j,k}.

Ensuite, lors d'une étape 24, pour chaque image I_{j,k}, on calcule la p-variation W_{j,k} associée à cette image I_{j,k}. La notion de p-variations est bien connue de l'homme du métier dans le domaine des statistiques et des probabilités. Ici, elle est calculée de la façon suivante : ${W}_{j , k} \left[m\right] = \frac{1}{{n}_{E}} {\sum }_{m ∈ E} {\left({V}_{j , k}\left[m\right]\right)}^{q}$

Dans l'équation ci-dessus, on a utilisé le symbole « q » à la place du symbole « p », classiquement utilisé dans cette équation, pour éviter toute confusion avec le symbole « p » utilisé dans cette description pour désigner la position d'un pixel. Dans cet exemple, on utilise une forme particulière des p-variations : les « variations quadratiques » ou « 2-variations », pour lesquelles q=2. Ainsi, on calcule la variation quadratique W_{j,k} de l'image I_{j,k} de la façon suivante, à partir des K-incréments calculés après filtrage lors de l'étape 22 : ${W}_{j , k} \left[m\right] = \frac{1}{{n}_{E}} {\sum }_{m ∈ E} {\left({V}_{j , k}\left[m\right]\right)}^{2}$

Ces variations quadratiques W_{j,k} contiennent des informations importantes pour l'identification de l'anisotropie. Pour extraire ces informations, on procède comme suit.

Lors d'une étape 26, une analyse de covariance comportant une régression statistique est effectuée sur toutes les variations W_{j,k} calculées pour chacune des images I_{j,k} afin d'estimer :
- la valeur de l'exposant de Hurst H de l'image I et,
- un terme βⱼ.

La régression statistique est définie par la relation suivante : $log \left(\left|{W}_{j , k}\right|\right) = log \left({\left|{u}_{jk}\right|}^{2}\right) * H + {β}_{j} + {ε}_{j , k} ,$ où :
- |uⱼₖ|² est la norme euclidienne au carré du vecteur uⱼₖ;
- H est l'exposant de Hurst de l'image I ;
- βⱼ est une quantité qui ne dépend pas du changement d'échelle k ; ici ce paramètre est analogue à un paramètre dit d'intercept de la régression, sauf qu'il dépend des rotations j.
- ε_{j,k} est un terme d'erreur de la régression dont les propriétés statistiques sont prédéterminées et fixées par l'utilisateur. Par exemple, les termes d'erreur ε_{j,k} sont des variables aléatoires gaussiennes corrélées entre elles.

On rappelle que l'exposant de Hurst H est une grandeur physique indépendante des rotations de l'image.

On obtient ainsi un nombre nⱼ de termes βⱼ, nⱼ étant le nombre de rotations différentes appliquées à l'image I.

Par exemple, si l'on s'est contenté de faire les deux rotations j1 et j2 précédemment décrites, on effectue la régression sur la base de toutes les variations quadratiques calculées pour j1 et pour j2. On obtient ainsi deux termes, βⱼ₁ et βⱼ₂.

À ce stade, lors d'une étape 28, le calculateur 14 estime les coefficients scalaires τₘ d'une fonction paire τ(θ) appelée fonction de topothésie asymptotique. La fonction τ(θ) est continue sur l'intervalle [0 ; 2π]. La fonction τ(θ) est la fonction qui minimise le critère C suivant : 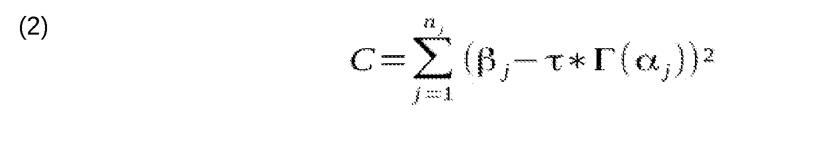 où :
- le symbole « τ^{∗}Γ(θ) » désigne la fonction obtenue en réalisant le produit de convolution circulaire entre les fonctions τ(θ) et Γ(θ),
- Γ(θ) est la fonction définie par la relation suivante : $Γ \left(θ\right) = {\int }_{ℝ +} {\left|\hat{v}\left(ρθ\right)\right|}^{2} {ρ}^{- 2 H - 1} d ρ$ où :
   - *V̂* est la transformée de Fourier discrète du noyau v,
   - H est l'exposant de Hurst de l'image acquise,
   - ρ est la variable d'intégration,

Les coefficients scalaires τₘ de le fonction τ(θ) sont définis par la relation suivante : $τ \left(θ\right) = {\sum }_{m = 0}^{M} {τ}_{m} {f}_{m} \left(θ\right)$ où :
- M est un nombre entier supérieur à un,
- τₘ sont les coefficients scalaires de la fonction τ(θ),
- fₘ(θ) sont les fonctions d'une base des fonctions π-périodiques définies sur l'intervalle [0 ; 2π].

Une fonction π-périodique est une fonction périodique de période π.

Dans ce mode de réalisation, la base de fonction π-périodique utilisée est une base de Fourier. Par conséquent, la fonction τ(θ) est ici définie par la relation suivante : $τ \left(θ\right) = {τ}_{0} + {\sum }_{m = 1}^{M} \left({τ}_{1 , m}cos\left(2mθ\right)+{τ}_{2 , m}sin\left(2mθ\right)\right)$ où τ₀, τ_{1,m} et τ_{2,m} sont les coefficients scalaires de la fonction τ(θ),

Le nombre M est une constante prédéfinie, par exemple par l'utilisateur. Généralement, ce nombre M est inférieur au nombre nⱼ d'angles αⱼ différents. Typiquement, ce nombre M est également supérieur ou égale à 2 ou 4. Typiquement, le nombre M est choisi de manière à ce que le nombre de coefficients scalaires de la fonction τ(θ) soit compris dans l'intervalle [0,35nⱼ ; 0,75nⱼ] ou dans l'intervalle [0,45nⱼ ; 0,55nⱼ].

Dans ce mode de réalisation et dans le contexte précisé ci-dessus, il a été possible d'établir une relation linéaire entre une approximation τ^{*} des coefficients de la fonction τ(θ) et les termes βⱼ estimés. Cette relation est la suivante : ${τ}^{∗} = {\left({L}^{T}L+λR\right)}^{- 1} {L}^{T} {β}_{_}$ (3) où :
- τ* est le vecteur (τ₀*. τ_{1,1}*, τ_{2,1}*, τ_{1,2}*, τ_{2,2}*, ..., τ_{1,M-1}*, τ_{2,M-1}*, τ_{1,M}*, τ_{2,M}*)^{T}, les coefficients τ₀*, τ_{1,1}*, τ_{2,1}*, τ_{1,2}*, τ_{2,2}*, .., τ_{1,M-1}*, τ_{2,M-1}*, τ_{1,M}*, τ_{2,M}* étant les estimations, respectivement, des coefficients τ₀, τ_{1,1}, τ_{2,1}, τ_{1,2}, τ_{2,2}, ..., τ_{1,M-1}, τ_{2,M-1}, τ_{1,M}, τ_{2,M},
- L est une matrice de dimension nⱼ x (2M+1) dont la k-ième colonne est définie par la relation suivante :
   (µ̂[0],µ̂[1]cos(α*ₖ*),µ̂[1]sin(*αₖ*),...,µ̂[*M*]cos(*M*α*ₖ*),µ̂[M ]sin(*M*α*ₖ*))
   où µ̂[0],µ̂[1],...,µ̂[*M*] sont les coefficients de la transformée de Fourier discrète de la fonction µ(θ) suivante : µ(θ)=|cos(θ)|^{2*H*}, où H est l'exposant de Hurst de l'image acquise,
- λ est un paramètre prédéterminé,
- R est une matrice diagonale de dimension (2M+1) x (2M+1) dont les coefficients sur la diagonale sont, dans l'ordre : 0, 2, 2, 5, 5, ..., (1+M²), (1+M²),
- le symbole «^{T} » désigne l'opération transposée,
- β est le vecteur (β₁, β₂, ..., β_{ηj-1}, βₙⱼ)^{T}.

Les inventeurs ont également établi que la valeur optimale du paramètre λ est égale ou très proche d'une valeur λ*. La valeur λ* est obtenue à l'aide de la relation suivante : ${λ}^{∗} = \frac{κ}{\left(1+{M}^{2}\right)} \frac{trace \left(V\left({β}_{_}\right)\right)}{{\left|{β}_{_}\right|}^{2}}$ (4) où :
- κ est égal à v₊/v₋, v+ et v₋ étant, respectivement, la plus grande et la plus petite valeur propre de la matrice L^{T}L,
- trace(X) est la fonction qui retourne la somme des coefficients diagonaux d'une matrice carrée X,
- V(β) est la matrice de covariance de l'estimateur du vecteur β,
- |β|² est la norme euclidienne au carré du vecteur β.

Ainsi, dans ce mode de réalisation, lors de l'étape 28, le calculateur 14 calcule la valeur λ* à l'aide de la relation ci-dessus. Ensuite, il choisit la valeur du paramètre λ proche de la valeur λ*. Par exemple, il choisit, par exemple aléatoirement, la valeur du paramètre λ dans l'intervalle [0 ; 1,3λ*] ou [0 ; 1,1λ*]. Le plus souvent, la valeur du paramètre λ est choisie dans l'intervalle [0,7λ*; 1,3λ*] ou [0,9λ*; 1,1λ*]. Ici, le paramètre λ est systématiquement choisi égal à la valeur λ*. Enfin, le calculateur estime les coefficients τ₀, τ_{1,m}, τ_{2,m} à l'aide de la relation (3).

La relation (4) a pu être établie en recherchant l'expression numérique des coefficients τ₀*, τ_{1,m}*, τ_{2,m}* qui minimise non pas directement le critère C mais un critère pénalisé C_{A}. Ce critère pénalisé C_{A} est par exemple le suivant : ${C}_{A} = C - λ {\sum }_{m = 1}^{M} \left(1+{m}^{2}\right) \left({τ}_{1 , m}^{2}+{τ}_{2 , m}^{2}\right)$ (5)

Le terme qui vient se soustraire au critère C dans la relation (4) est connue sous l'expression « pénalité ».

De plus, dans le cas où le filtre v est celui défini par la relation (1), alors le produit de convolution circulaire τ*Γ(θ) peut s'écrire sous la forme suivante : $τ ∗ Γ \left(θ\right) = γτ ∗ μ \left(θ\right)$ (6) où :
- µ(θ) est défini par la relation suivante : $μ \left(θ\right) = {\left|cos\left(θ\right)\right|}^{2 H}$
- γ est une constante indépendante de la valeur θ,
- le symbole « * » est le produit de convolution circulaire de sorte que τ*µ(θ) désigne la fonction résultant du produit de convolution circulaire entre les fonctions τ(θ) et µ(θ).

La constante γ est définie par la relation suivante : $γ = 2 {\int }_{ℝ +} {\left|\hat{v}\left(ρ\right)\right|}^{2} {ρ}^{- 2 H - 1} d ρ$ où les symboles utilisés dans la relation ci-dessus on déjà été définis précédemment et |...|² est la norme euclidienne au carré.

Dès lors, le critère approché C_{A} s'écrit sous la forme suivante : ${C}_{A} = {\left|Lτ-{β}_{_}\right|}^{2} + {λτ}^{T} R τ$ où les symboles L, τ, β, λ et R ont précédemment été définis et |...|² est la norme euclidienne au carré. Le vecteur τ* est la solution numérique du critère C_{A}.

Pour une valeur donnée de l'angle θ comprise entre 0 et π, la valeur de la fonction τ(θ) dépend des caractéristiques de la texture de l'image dans la direction θ. Cette valeur est indépendante de la valeur de l'exposant H de Hurst. Dès lors, la dispersion statistique des valeurs de la fonction τ(θ) pour θ variant entre 0 et π est représentative de l'anisotropie de la texture de l'image. Par exemple, la dispersion statistique de la fonction τ(θ) est représentée par un indice A fonction de la somme des écarts suivants : |τ - M_{τ}|_{Lp}, pour θ variant entre 0 et π, où :
- τ est la fonction τ(θ),
- M_{τ} est une valeur moyenne des valeurs de la fonction τ(θ) pour θ variant de 0 à π ou une approximation de cette moyenne, et
- |...|_{Lp} est la norme L1 si Lp est égal à 1, la norme L2 si Lp est égal à 2 et ainsi de suite, Lp étant strictement supérieur à zéro.

Ainsi, la dispersion statistique de la fonction τ(θ) peut être la variance ou l'écart type des valeurs de cette fonction sur [0 ; π]. Par exemple, ici, Lp est choisi égal à 2 et l'indice A calculé est égal à la racine carrée de la somme définie ci-dessus. Dès lors, plus la valeur de l'indice A est grande, plus l'anisotropie de l'image est grande. Dans ces conditions, l'indice A est défini par la relation suivante :

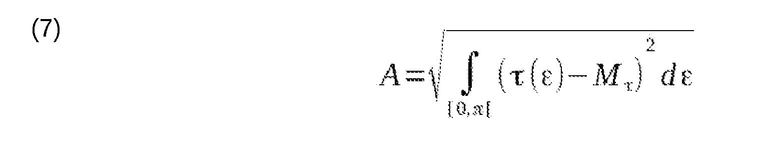

Ici, lors d'une étape 30, le calculateur 14 calcule l'indice A à l'aide de la formule suivante qui correspond à la relation (7) : $A = \sqrt{{\sum }_{m = 1}^{M} \left({τ}_{1 , m}^{∗ 2}+{τ}_{2 , m}^{∗ 2}\right)}$

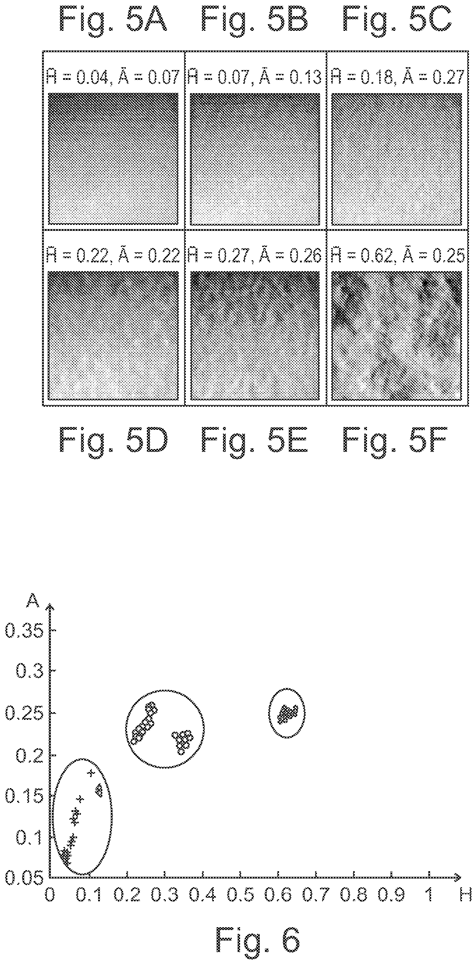

L'ordinogramme de la figure 4 décrit un exemple d'application du procédé ci-dessus pour classer automatiquement des images 2 les unes par rapport aux autres en fonction de leur texture. Cet exemple est donné dans le cas particulier où les images sont des photographies de feuilles de papier prises à l'aide d'un microscope et sous une illumination rasante. De telles prises de vues sont illustrées sur les figures 5A à 5F. Les figures 5A à 5C représentent des images de feuilles de papier brillant de trois fabricants différents. Le figures 5D et 5E représentent des images de feuilles de papier satiné. La figure 5F représente une image d'une feuille de papier mate. Les bases de données contenant ces images sont décrites en détails dans les articles suivants :
- R. Johnson, P. Messier, W. Sethares, et al : « Pursuing automated classification of historic photographic papers from raking light images », J. AM. Inst. Conserv. 53(3):159-170, 2014, et
- P. Messier, R. Johnson, H. Wilhelm, W. Sethares, A. Klein, et Al : « Automated surface texture classification of inkjet and photographic media », In NIP & Digital Fabrication Conférence, pages 85-91, Society for Imaging Science and Technology, 2013.

Lors d'une étape 40, une pluralité d'images numériques 2 sont automatiquement acquises. Parmi les images acquises, certaines correspondent à du papier brillant, d'autres à du papier satiné et d'autres à du papier mate.

Lors d'une étape 42, pour chacune d'entre elles, l'indice A d'anisotropie et l'exposant H de Hurst sont calculés en mettant en œuvre le procédé de la figure 3. Dans ce cas particulier, le procédé de la figure 3 a été mis en œuvre avec M=23 et nⱼ = 96.

Lors d'une étape 44, les images acquises sont classées automatiquement les unes par rapport aux autres en fonction de leur indice A et de leur exposant H calculés lors de l'étape 42. Cette classification est par exemple réalisée au moyen d'un classificateur (« classifier » en langue anglaise) tel qu'un algorithme de classement à base de réseaux de neurones ou une machine à vecteurs de support (« support vector machine » en langue anglaise).

Le graphe de la figure 6 représente pour chaque image un point de coordonnées (H, A), où H et A sont, respectivement, l'exposant de Hurst et l'indice d'anisotropie calculés pour cette image. Ici, la fonction τ(θ) a été normalisé. Sur ce graphe, les points représentés par des croix, des ronds et des losanges correspondent à des images d'un papier, respectivement, brillant, satiné et mate. Ce graphe montre que la combinaison de l'exposant H de Hurst et de l'indice A d'anisotropie permet de distinguer efficacement les différents types de papier entre eux. Ici, tous les papiers brillants, satinés et mates sont dans des zones très différentes. Ces zones sont entourées sur le graphe de la figure 6. De plus, à l'intérieur d'une même zone, un amas de points tous regroupés dans une zone encore plus étroite correspond souvent à un fabricant particulier ou à un tirage particulier. Ainsi, la classification peut non seulement distinguer les différents types de papier mais aussi, pour un même type de papier, des fabricants différents ou des tirages différents.

### Variantes de l'image :

Les pixels de l'image 2 peuvent présenter d'autres valeurs d'intensités. La valeur d'intensité de chaque pixel peut être une valeur réelle. Ou bien elle peut être supérieure à 256. Par exemple, l'image 2 est encodée en couleurs. Dans ce cas, l'image en couleurs est séparée en une pluralité d'images monochromes correspondant chacune à des canaux colorimétriques qui composent l'image en couleurs. Le procédé est alors appliqué séparément pour chacune de ces images monochromes.

L'image 2 peut présenter une forme non carrée. Par exemple, en dimension d = 2, l'image présente une forme rectangulaire ou même trapézoïdale. Lorsque l'image ne présente pas une forme régulière, les notions de direction « horizontale » et « verticale » sont remplacées par des directions de références adaptées à la géométrie de l'image. Par exemple, dans le cas d'une image de forme triangulaire, on prendra comme référence la base et la hauteur du triangle.

La dimension d des images peut être supérieure à deux. Par exemple, l'image 2 peut être un hypercube de dimension d.

L'image 2 peut être autre chose qu'un cliché de mammographie ou d'une feuille de papier. Par exemple, il peut s'agir d'un cliché d'un tissu osseux. L'anisotropie de la texture de l'image renseigne alors sur la présence de pathologies osseuses, comme l'ostéoporose. D'autres domaines d'application plus larges peuvent être envisagés, comme d'autres types de tissus biologiques, des images aériennes ou satellitaires, des images géologiques, ou des clichés de matériaux. De façon générale, la méthode s'applique à n'importe quel type d'image irrégulière et texturée tel qu'une image obtenue à partir d'un appareil électronique quelconque de prise d'images.

### Variante du procédé d'estimation des termes βⱼ et H :

D'autres modifications T_{j,k} peuvent être utilisées. Par exemple, en dimension d = 3, les modifications T_{j,k} réalisent une rotation j autour d'un axe de rotation donné et un changement d'échelle k selon une direction donnée de l'image. Par exemple, les modifications suivantes peuvent être utilisées : ${T}_{j , k} = {γ}_{k} \left[\begin{matrix}cos \left({α}_{j}\right) & - sin \left({α}_{j}\right) & 0 \\ sin \left({α}_{j}\right) & cos \left({α}_{j}\right) & 0 \\ 0 & 0 & {y}_{k}\end{matrix}\right]$ ${T}_{j , k} = {γ}_{k} \left[\begin{matrix}cos \left({α}_{j}\right) & 0 & - sin \left({α}_{j}\right) \\ 0 & {y}_{k} & 0 \\ sin \left({α}_{j}\right) & 0 & cos \left({α}_{j}\right)\end{matrix}\right]$ ${T}_{j , k} = {γ}_{k} \left[\begin{matrix}{y}_{k} & 0 & 0 \\ 0 & cos \left({α}_{j}\right) & - sin \left({α}_{j}\right) \\ 0 & sin \left({α}_{j}\right) & cos \left({α}_{j}\right)\end{matrix}\right]$

Les modifications T_{j,k} ci-dessus réalisent une rotation autour d'un axe et un changement d'échelle dans une direction non-parallèle à cet axe.

Les valeurs de l'angle αⱼ peuvent être différentes. De préférence, on choisit des valeurs de l'angle αⱼ qui ne nécessitent pas d'interpolations. Toutefois, il est aussi possible de choisir des valeurs de l'angle αⱼ qui nécessitent une interpolations des pixels de l'image transformée pour retrouver les valeurs associées à chaque position p comprise dans l'ensemble E.

En variante, la rotation et le changement d'échelle ne sont pas appliqués en même temps.

D'autres filtres v peuvent être utilisés pour calculer les K-incréments. Par exemple, pour calculer les K-incréments on peut également utiliser tout filtre dont le noyau de convolution est défini comme étant égal au produit de convolution :
- d'un noyau v1 de convolution quelconque, et
- d'un noyau v2 de convolution égal au noyau v précédemment décrit.
Dans le cas particulier où le noyau v1 est une matrice identité, on retrouve le filtre v précédemment décrit. A l'inverse, choisir un noyau v1 différent de la matrice identité permet de construire un grand nombre de filtres différents des filtres v précédemment décrits mais qui conviennent tous pour calculer les K-incréments.

Le filtrage peut être implémenté différemment lors de l'étape 22. En particulier, la transformation et le filtrage ne sont pas forcément appliqués simultanément, mais dans des formules séparées.

En variante, toutes les transformations T_{j,k} sont d'abord appliquées sur l'image I, puis, dans un second temps, les filtres sont appliqués sur chacune des images T_{j,k}(I).

La valeur de K peut être différente. En particulier, avec le filtre v choisi dans l'exemple, lorsque l'image I ne présente pas de tendance, c'est-à-dire que M = 0, alors on prendra préférentiellement |L| = 2 ou, si d>4, |L| = 1+d/4.

En variante, plusieurs filtres vᵢ sont appliqués sur chaque image T_{j,k}(I) lors de l'étape 22. On note ni le nombre de filtres vᵢ différents appliqués sur une image donnée T_{j,k}(I). Dans ce cas, on note I_{i,j,k} l'image transformée obtenue en appliquant le filtre vᵢ sur l'image T_{j,k}(I) et V_{i,j,k}[m] le K-incrément de cette image à la position m dans cette image, où « i » est un indice qui identifie de façon unique le filtre vᵢ appliqué. Cet indice « i » est ici distinct de l'indice « i » utilisé précédemment comme variable muette notamment en référence à la dérivée partielle du polynôme Qᵥ(z). De fait, on peut alors calculer plusieurs variations quadratiques pour chaque image T_{j,k}(I), une pour chaque filtre vᵢ appliqué à cette image T_{j,k}(I). On note ainsi W_{i,j,k} la variation quadratique calculée pour l'image I_{i,j,k}.

À cet effet, l'étape 22 comporte une opération de sélection des filtres vᵢ, par exemple parmi une bibliothèque de filtres prédéfinie.

Les variations quadratiques W_{i,j,k} sont alors calculées lors de l'étape 24 a l'aide de la relation suivante : ${W}_{i , j , k} \left[m\right] = \frac{1}{{n}_{E}} {\sum }_{m ∈ E} {\left({V}_{i , j , k}\left[m\right]\right)}^{2}$

Lors de l'étape 26, la régression est alors effectuée de la manière suivante en tenant compte des nᵢ filtres appliqués : log(|W_{i,j,k}|) = log(|uⱼk|²)^{∗}H + β_{i,j} + ε_{i,j,k}, où :
- β_{i,j} est le terme βⱼ associé au filtre vᵢ ;
- ε_{i,j,k} est le terme d'erreur ε_{j,k} associé au filtre vᵢ.

On obtient ainsi un nombre n_{b} de termes β_{i,j}, où n_{b} = nⱼ^{∗}nᵢ, nⱼ étant le nombre de rotations différentes appliquées à l'image I. Lors de l'étape 28, le procédé de la figure 3 est mis en œuvre pour chaque filtre vᵢ Ainsi, on obtient les coefficients scalaires de i fonctions τᵢ(θ). L'indice A d'anisotropie est alors calculé à partir des coefficients approximés pour chacune des ces fonctions τᵢ(θ). Par exemple, dans un mode de réalisation simplifié, un indice Aᵢ d'anisotropie est calculé comme décrit précédemment pour chacune des fonctions τᵢ(θ). Ensuite, l'indice A calculé est la moyenne de ces indices Aᵢ.

Lorsque plusieurs filtres vᵢ sont utilisés, le nombre de filtres vᵢ appliqués peut varier d'une image T_{j,k}(I) à l'autre, à condition toutefois qu'à un filtre i correspondent au moins deux rotations j et, pour chacune de ces rotations j, au moins deux changements d'échelle k.

### Variantes de l'estimation de τ* :

La pénalité utilisée dans le critère C_{A} peut être différente. Tant que la pénalité est une fonction différentiable, alors il est possible de déterminer une relation linéaire, telle que la relation (3), qui exprime directement l'estimation des coefficients τₘ en fonction des termes βⱼ. En particulier, il est possible de trouver une telle relation linéaire quel que soit le filtre v et la base de fonctions fₘ(θ) π-périodiques utilisés. Le filtre v peut donc être différent de celui défini par la relation (1) et la base utilisée peut aussi être différente de la base de Fourier. Lorsque le filtre v est différent de celui défini par la relation (1) ou lorsque la base est différente de la base de Fourier, la relation linéaire est différente de celle définie par la relation (3).

La pénalité utilisée dans le critère C_{A} peut aussi être une fonction non différentiable. Dans ce cas, il peut être difficile voire impossible d'établir une relation linéaire entre l'estimation des coefficients τₘ et les termes βⱼ. Par exemple, la pénalité peut utiliser une norme L1 de la fonction τ(θ) qui est non différentiable. Dans ce cas, d'autres méthodes sont possibles pour approximer les coefficients de la fonction τ(θ) qui minimise ce critère pénalisé. Par exemple, l'estimation des coefficients τ₀, τ_{1,m}, τ_{2,m} qui minimisent le critère C_{A} sont estimées en exécutant un algorithme connu de minimisation d'un tel critère tel que l'algorithme ISTA (« Iterative Shrinkage-Thresholding Algorithm ») ou FISTA («Fast Iterative Shrinkage-Thresholding Algorithm »).

La variante décrite ici permet d'estimer les valeurs des coefficients τ₀, τ_{1,m}, τ_{2,m} qui minimisent le critère C_{A} sans disposer pour cela d'une relation numérique linéaire, comme la relation (3), qui permet d'obtenir directement une estimation de ces coefficients τ₀, τ_{1,m}, τ_{2,m} à partir des valeurs des termes βⱼ.

Le mode de réalisation précédent a été décrit dans le cas particulier où la fonction τ(θ) est décomposée sur une base de Fourier de fonction π-périodique. Toutefois, le procédé décrit précédemment fonctionne aussi si la fonction τ(θ) est décomposée sur n'importe quelle autre base de fonction fₘ π-périodique où chaque fonction fₘ est définie sur l'intervalle [0 ; 2π]. En particulier, il n'est pas nécessaire que la base des fonctions fₘ π-périodique soit une base orthogonale. Ainsi, dans la base des fonctions fₘ, la fonction τ(θ) est définie la par la relation suivante : $τ \left(θ\right) = {\sum }_{m = 0}^{M} {τ}_{m} {f}_{m} \left(θ\right)$ où les τₘ sont les coefficients scalaires de la fonction τ(θ). Par exemple, en variante, les fonctions fₘ sont des fonctions π-périodiques constantes par morceaux sur [0 ; π]. Une fonction constante par morceaux est une fonction qui prend des valeurs constantes sur plusieurs sous-intervalles immédiatement successifs et compris entre [0 ; π].

La méthode de minimisation du critère C ou du critère C_{A} au moyen d'algorithmes connus de minimisation d'un tel critère peut être mise en œuvre quelle que soit la forme de la fonction fₘ retenue.

En variante, le nombre M peut être supérieur ou égal au nombre nⱼ.

### Variantes du calcul de l'indice A :

En variante, l'indice A est calculée uniquement pour les angles θ égaux aux angles αⱼ et non pas pour toutes les valeurs de θ comprises entre 0 et π. Dans ce cas, par exemple, l'indice A est uniquement fonction de la somme des écarts suivants :

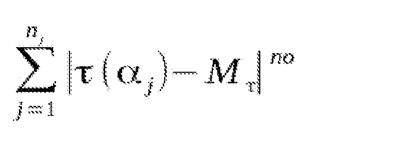

La classification peut être réalisée différemment lors de l'étape 42. Par exemple, l'ordre de classement des images peut être choisi différemment.

## Revendications

1. Procédé de caractérisation de l'anisotropie de la texture d'une image numérique, comportant :
a) l'acquisition (20) d'une image numérique formée de pixels, chaque pixel étant associé à une intensité lumineuse et à une position dans l'espace 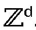 , où d est un entier naturel supérieur ou égal à deux ;
b) la transformation automatique (22) de l'image acquise pour obtenir une image transformée I_{j,k}, la transformation comportant l'application d'une modification T_{j,k} de l'image qui fait tourner d'un angle αⱼ chaque pixel de l'image acquise d'une position à une autre autour d'un point ou d'un axe et qui agrandit ou réduit l'image d'un facteur γₖ, où αⱼ = arg(uⱼₖ) et γₖ = |uⱼₖ|², uⱼₖ étant un vecteur qui caractérise complètement la modification T_{j,k}, les indices j et k identifiant respectivement et de façon unique l'angle αⱼ et le facteur γₖ,
puis, pour chaque image transformée, le calcul d'un K-incrément V_{j,k}[m] pour chaque pixel de position m de l'image transformée, ce K-incrément étant calculé par application d'un noyau de convolution v au moyen de la formule suivante : ${V}_{j , k} \left[m\right] = {\sum }_{p ∈ {\left[0, L\right]}^{d}} v \left[p\right] ⋅ Z \left[m-{T}_{j , k}⋅p\right]$ où :
- le produit T_{j,k}.p correspond à l'application de la modification T_{j,k} au pixel qui avait initialement la position p dans l'image I ;
- le noyau de convolution v réalise un filtrage linéaire et possède un polynôme caractéristique Qᵥ(z) et un support fini [0,L]^{d}, v[p] étant la valeur du noyau v de convolution pour la position p, le polynôme caractéristique Qᵥ(z) étant défini par la formule suivante : $∀ z ∈ {ℝ}^{d} , {Q}_{v} \left(z\right) = {\sum }_{p ∈ {\left[0, L\right]}^{d}} v \left[p\right] {z}^{p}$
et satisfaisant la condition suivante : 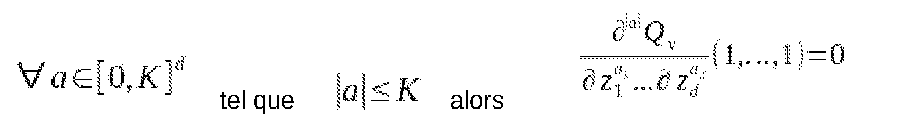 où :
- L est un vecteur acquis de [0, N]^{d} qui paramétrise le noyau v,
- N est un vecteur appartenant à 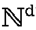 qui code la taille de l'image et dont les composantes sont des entiers naturels strictement positifs ;
- la constante K est un entier naturel non nul acquis;
- z un vecteur de composantes Z₁, Z₂, ..., Z_{d} ;
- z^{p} désigne le monôme z₁^{p1}* z₂^{p2}*...*z_{d}^{pd} ;
- ∂^{|a|}Qᵥ/∂z₁^{a1}...∂z_{d}^{ad} est la dérivée partielle du polynôme Qᵥ(z) par rapport aux composantes du vecteur z, le symbole ∂zi^{ai} indiquant une différentiation du polynôme Qᵥ(z) d'ordre aᵢ par rapport à la variable zᵢ, où zᵢ désigne la i-ième composante du vecteur z et aᵢ la i-ième composante du vecteur a, i étant un indice entier supérieur ou égal à 0 et inférieur ou égal à d ;
l'étape b) étant exécutée avec nⱼ angles αⱼ différents et, pour chaque angle αⱼ, avec au moins deux facteurs γₖ différents, nⱼ étant un entier supérieur ou égal à deux de manière à obtenir au moins quatre images transformées I_{j,k} différentes ;
c) pour chaque image transformée I_{j,k} différente, le calcul (24) d'une p-variation W_{j,k} de cette image transformée à partir desdits K-incréments calculés ;
d) l'estimation (26) des termes βⱼ de la régression statistique suivante :
log(|W_{j,}k|) = log(|uⱼₖ|²)^{∗}H + βⱼ + ε_{j,k}, où :
- H est l'exposant de Hurst de l'image acquise ;
- ε_{j,k} est un terme d'erreur de la régression dont les propriétés statistiques sont prédéterminées ;
**caractérisé en ce que** le procédé comporte également :
e) l'estimation (28) des coefficients scalaires τₘ d'une fonction paire τ(θ) définie sur [0 ; 2π] qui minimise le critère C suivant : $C = {\sum }_{j = 1}^{{n}_{j}} {\left({β}_{j}-τ∗Γ\left({α}_{j}\right)\right)}^{2}$ où :
- βⱼ sont les termes estimés lors de l'étape d),
- τ(θ) est la fonction définie par la relation suivante pour tout angle θ appartenant à [0 ; 2π] : $τ \left(θ\right) = {\sum }_{m = 0}^{M} {τ}_{m} {f}_{m} \left(θ\right)$ où :
- M est un nombre entier supérieur à un acquis et constant,
- τₘ sont les coefficients scalaires de la fonction τ(θ),
- fₘ(θ) sont les fonctions d'une base des fonctions π-périodiques définies sur l'intervalle [0 ; 2π],
- Γ(θ) est la fonction définie par la relation suivante : $Γ \left(θ\right) = {\int }_{ℝ +} {\left|\hat{v}\left(ρθ\right)\right|}^{2} {ρ}^{- 2 H - 1} d ρ$ où :
- *V̂* est la transformée de Fourier discrète du noyau v,
- H est l'exposant de Hurst de l'image acquise,
- ρ est la variable d'intégration,
- le symbole « * » désigne le produit de convolution circulaire entre les fonctions τ(θ) et Γ(θ),
f) puis, le calcul (30), en fonction de l'estimation des coefficients scalaires τₘ, d'un indice d'anisotropie qui caractérise l'anisotropie de l'image, cette indice variant de façon monotone en fonction de la dispersion statistique des valeurs de la fonction τ(θ) pour θ variant entre 0 et π.

2. Procédé selon la revendication 1, dans lequel le noyau v utilisé lors de l'étape b) est égal au produit de convolution d'un noyau de convolution quelconque avec le noyau défini de la façon suivante : $v \left[p\right] = {\left(-1\right)}^{\left|p\right|} \times {C}_{{L}_{1}}^{{p}_{1}} \times … \times {C}_{{L}_{d}}^{{p}_{d}} = {\left(-1\right)}^{\left|p\right|} \times {\prod }_{i = 1}^{d} \frac{{L}_{i} !}{{p}_{i} ! \times \left({L}_{i}-{p}_{i}\right) !}$ si le vecteur p appartient à [0,L]^{d} et v[p] = 0 sinon, où les termes C^{p}_{L} désignent des coefficients binomiaux, la constante K étant alors égale à K = |L| -1.

3. Procédé selon la revendication 2, dans lequel :
- les fonctions fₘ sont les fonctions de la base de Fourier et la fonction τ(θ) est définie par la relation suivante : $τ \left(θ\right) = {τ}_{0} + {\sum }_{m = 1}^{M} \left({τ}_{1 , m}cos\left(2mθ\right)+{τ}_{2 , m}sin\left(2mθ\right)\right)$ où τ₀, τ_{1,m} et τ_{2,m} sont les coefficients scalaires de la fonction τ(θ),
- le noyau v est définie par la relation suivante : $v \left[p\right] = {\left(-1\right)}^{{p}_{1}} \frac{{L}_{1} !}{{p}_{1} ! \left({L}_{1}-{p}_{1}\right) !}$
- lors de l'étape e) (28), l'estimation de ces coefficients est calculée à l'aide de la relation suivante : ${τ}^{∗} = {\left({L}^{T}L+λR\right)}^{- 1} {L}^{T} {β}_{_}$ où :
- τ* est le vecteur (τ₀*, τ_{1,1}*, τ_{2,1}*, τ_{1,2}*, τ_{2,2}*, ..., τ_{1,M-1}*, τ_{2,M-1}*, τ_{1,M}*, τ_{2,M}*)^{T}. les coefficients τ₀*, τ_{1,1}*, τ_{2,1}*, τ_{1,2}*, τ_{2,2}*, .., τ_{1,M-1}*, τ_{2,M-1}*, τ_{1,M}*, τ_{2,M}* étant les estimations, respectivement, des coefficients τ₀, τ_{1,1}, τ_{2,1}, τ_{1,2}, T2,2, ...,τ_{1,M-1}, τ_{2,M-1}, τ_{1,M}, τ_{2,M},
- L est la matrice de dimension nⱼ x (2M+1) dont la k-ième colonne est définie par la relation suivante :
(µ̂[0],µ̂[1]cos(α*ₖ*),µ̂[1]sin(αₖ),...,µ̂[*M*]cos(*M*α*ₖ*),µ̂[*M*]sin(*Mαₖ*))
où µ̂[0],µ̂[1],...,µ̂[*M*] sont les coefficients de la transformée de Fourier discrète de la fonction µ(θ) suivante: µ(θ)=|cos(θ)|^{2*H*}, où H est l'exposant de Hurst de l'image acquise,
- λ est un paramètre prédéterminé,
- R est une matrice diagonale de dimension (2M+1) x (2M+1) dont les coefficients sur la diagonale sont, dans l'ordre : 0, 2, 2, 5, 5, ..., (1+M²), (1+M²),
- le symbole «^{T} » désigne l'opération transposée,
- β est le vecteur (β₁, β₂, ..., βₙⱼ₋₁, βₙⱼ)^{T}.

4. Procédé selon la revendication 3, dans lequel le procédé comporte :
- le calcul (28) d'une valeur λ* définie par la relation suivante : ${λ}^{∗} = \frac{κ}{\left(1+{M}^{2}\right)} \frac{trace \left(V\left({β}_{_}\right)\right)}{{\left|{β}_{_}\right|}^{2}}$ où :
- κ est égal à v₊/v₋, v+ et v₋ étant, respectivement, la plus grande et la plus petite valeur propre de la matrice L^{T}L,
- trace(X) est la fonction qui retourne la somme des coefficients diagonaux d'une matrice carrée X,
- V(β) est la matrice de covariance du vecteur β,
- |β|² est la norme euclidienne au carré du vecteur β, et
- le choix (28) automatique du paramètre λ dans l'intervalle [0 ; 1,3λ*].

5. Procédé selon l'une quelconque des revendications précédentes, dans lequel l'indice d'anisotropie est calculé (30) à partir de la somme des écarts suivants : 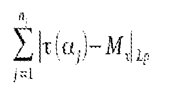 où :
- M_{τ} est une estimation d'une valeur moyenne de la fonction τ(θ) pour θ variant entre 0 et π,
- |...|_{Lp} est la norme L1 si Lp est égal à 1, la norme L2 si Lp est égal à deux et ainsi de suite, Lp étant strictement supérieur à zéro.

6. Procédé selon la revendication 5, dans lequel l'indice A d'anisotropie est calculé (30) à l'aide de la relation suivante : $A = \sqrt{{\sum }_{m = 1}^{M} \left({τ}_{1 , m}^{∗ 2}+{τ}_{2 , m}^{∗ 2}\right)}$

7. Procédé selon l'une quelconque des revendications précédentes, dans lequel :
- le vecteur uⱼₖ est un vecteur de 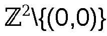 ,
- la modification T_{j,k} présente :
- pour d = 2, la forme matricielle suivante : ${T}_{j , k} = {γ}_{k} \left[\begin{matrix}cos \left({α}_{j}\right) & - sin \left({α}_{j}\right) \\ sin \left({α}_{j}\right) & cos \left({α}_{j}\right)\end{matrix}\right]$
- et, pour d = 3, l'une des formes matricielles suivantes ou une composition de ces formes matricielles : ${T}_{j , k} = {γ}_{k} \left[\begin{matrix}cos \left({α}_{j}\right) & - sin \left({α}_{j}\right) & 0 \\ sin \left({α}_{j}\right) & cos \left({α}_{j}\right) & 0 \\ 0 & 0 & {y}_{k}\end{matrix}\right]$ ${T}_{j , k} = {γ}_{k} \left[\begin{matrix}cos \left({α}_{j}\right) & 0 & - sin \left({α}_{j}\right) \\ 0 & {y}_{k} & 0 \\ sin \left({α}_{j}\right) & 0 & cos \left({α}_{j}\right)\end{matrix}\right]$ ${T}_{j , k} = {γ}_{k} \left[\begin{matrix}{y}_{k} & 0 & 0 \\ 0 & cos \left({α}_{j}\right) & - sin \left({α}_{j}\right) \\ 0 & sin \left({α}_{j}\right) & cos \left({α}_{j}\right)\end{matrix}\right]$ l'image transformée étant obtenue en multipliant les coordonnées de la position de chaque pixel par la matrice T_{j,k}, et
- le calcul des K-incréments est réalisé à partir des seuls pixels de l'image qui occupent une position m appartenant à un ensemble E, cet ensemble E comportant seulement des positions m qui existent déjà dans l'image I et qui, quelle que soit la modification T_{j,k}, après application de cette modification T_{j,k}, occupent une position qui existe aussi déjà dans l'image I et pour lesquels la position « m- T_{j,k}.p » occupe une position qui existe aussi déjà dans l'image I ; l'image transformée I_{j,k} obtenue à l'issue du calcul de ce K-incrément comportant uniquement des pixels dont les positions appartiennent à l'ensemble E.

8. Procédé selon la revendication 7, dans lequel les p-variations calculées lors de l'étape c) sont des variations quadratiques calculées selon la formule suivante : ${W}_{j , k} \left[m\right] = \frac{1}{{n}_{E}} {\sum }_{m ∈ E} {\left({V}_{j , k}\left[m\right]\right)}^{q}$ où q=2 et n_{E} le nombre des positions qui appartiennent à l'ensemble E.

9. Procédé de classement automatique d'images numériques en fonction de l'anisotropie de leur texture, ce procédé comportant l'acquisition (40) d'une pluralité d'images formées chacune d'une pluralité de pixels ;
**caractérisé en ce qu'**il comporte :
- le calcul automatique (42), pour chacune des images acquises, d'un indice d'anisotropie respectif au moyen d'un procédé conforme à l'une quelconque des revendications précédentes, et
- le classement (44) des images numériques acquises, à l'aide d'un classificateur automatique, en fonction de l'indice d'anisotropie calculé pour chacune desdites images.

10. Support (16) d'enregistrement d'informations, **caractérisé en ce qu'**il comporte des instructions pour la réalisation d'un procédé conforme à l'une quelconque des revendications précédentes, lorsque ces instructions sont exécutées par un calculateur électronique.

11. Calculateur électronique (14) pour la mise en œuvre de l'une quelconque des revendications 1 à 9, ce calculateur étant programmé pour exécuter les étapes suivantes :
a) l'acquisition (20) d'une image numérique formée de pixels, chaque pixel étant associé à une intensité lumineuse et à une position dans l'espace 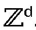 , où d est un entier naturel supérieur ou égal à deux ;
b) la transformation automatique (22) de l'image acquise pour obtenir une image transformée I_{j,k}, la transformation comportant l'application d'une modification T_{j,k} de l'image qui fait tourner d'un angle αⱼ chaque pixel de l'image acquise d'une position à une autre autour d'un point ou d'un axe et qui agrandit ou réduit l'image d'un facteur γₖ, où αⱼ = arg(uⱼₖ) et γₖ = |uⱼₖ|², uⱼₖ étant un vecteur qui caractérise complètement la modification T_{j,k}, les indices j et k identifiant respectivement et de façon unique l'angle αⱼ et le facteur γₖ,
puis, pour chaque image transformée, le calcul d'un K-incrément V_{j,k}[m] pour chaque pixel de position m de l'image transformée, ce K-incrément étant calculé par application d'un noyau de convolution v au moyen de la formule suivante : ${V}_{j , k} \left[m\right] = {\sum }_{p ∈ {\left[0, L\right]}^{d}} v \left[p\right] ⋅ Z \left[m-{T}_{j , k}⋅p\right]$ où :
- le produit T_{j,k}.p correspond à l'application de la modification T_{j,k} au pixel qui avait initialement la position p dans l'image I ;
- le noyau de convolution v réalise un filtrage linéaire et possède un polynôme caractéristique Qᵥ(z) et un support fini [0,L]^{d}, v[p] étant la valeur du noyau v de convolution pour la position p, le polynôme caractéristique Qᵥ(z) étant défini par la formule suivante : $∀ z ∈ {ℝ}^{d} , {Q}_{v} \left(z\right) = {\sum }_{p ∈ {\left[0, L\right]}^{d}} v \left[p\right] {z}^{p}$ et satisfaisant la condition suivante : 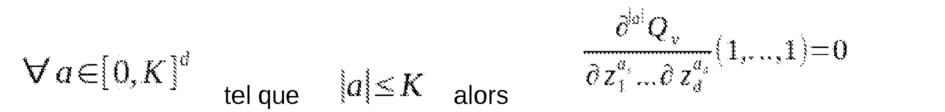 où :
- L est un vecteur acquis de [0, N]^{d} qui paramétrise le noyau v,
- N est un vecteur appartenant à 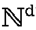 qui code la taille de l'image et dont les composantes sont des entiers naturels strictement positifs ;
- la constante K est un entier naturel non nul acquis;
- z un vecteur de composantes z₁, z₂, ..., z_{d} ;
- z^{p} désigne le monôme z₁^{p1}* z₂^{p2}*...* Z_{d}^{pd} ;
- ∂^{|a|}Qᵥ/∂z₁^{a1}...∂z_{d}^{ad} est la dérivée partielle du polynôme Qᵥ(z) par rapport aux composantes du vecteur z, le symbole ∂zi^{ai} indiquant une différentiation du polynôme Qᵥ(z) d'ordre aᵢ par rapport à la variable zᵢ, où zᵢ désigne la i-ième composante du vecteur z et aᵢ la i-ième composante du vecteur a, i étant un indice entier supérieur ou égal à 0 et inférieur ou égal à d ;
l'étape b) étant exécutée avec nⱼ angles αⱼ différents et, pour chaque angle αⱼ, avec au moins deux facteurs γₖ différents, nⱼ étant un entier supérieur ou égal à deux de manière à obtenir au moins quatre images transformées I_{j,k} différentes ;
c) pour chaque image transformée I_{j,k} différente, le calcul (24) d'une p-variation W_{j,k} de cette image transformée à partir desdits K-incréments calculés ;
d) l'estimation (26) des termes βⱼ de la régression statistique suivante : $log \left(\left|{W}_{j , k}\right|\right) = log \left({\left|{u}_{jk}\right|}^{2}\right) * H + {β}_{j} + {ε}_{j , k} ,$où:
- H est l'exposant de Hurst de l'image acquise ;
- ε_{j,k} est un terme d'erreur de la régression dont les propriétés statistiques sont prédéterminées ;
**caractérisé en ce que** le calculateur est également programmé pour exécuter les étapes suivantes :
e) l'estimation (28) des coefficients scalaires τₘ d'une fonction paire τ(θ) définie sur [0 ; 2π] qui minimise le critère C suivant : $C = {\sum }_{j = 1}^{{n}_{j}} {\left({β}_{j}-τ∗Γ\left({α}_{j}\right)\right)}^{2}$ où :
- βⱼ sont les termes estimés lors de l'étape d),
- τ(θ) est la fonction définie par la relation suivante pour tout angle θ appartenant à [0 ; 2π] : $τ \left(θ\right) = {\sum }_{m = 0}^{M} {τ}_{m} {f}_{m} \left(θ\right)$ où :
- M est un nombre entier supérieur à un acquis et constant,
- τₘ sont les coefficients scalaires de la fonction τ(θ),
- fₘ(θ) sont les fonctions d'une base des fonctions π-périodiques définies sur l'intervalle [0 ; 2π],
- Γ(θ) est la fonction définie par la relation suivante : $Γ \left(θ\right) = {\int }_{ℝ +} {\left|\hat{v}\left(ρθ\right)\right|}^{2} {ρ}^{- 2 H - 1} d ρ$ où :
- *V̂* est la transformée de Fourier discrète du noyau v,
- H est l'exposant de Hurst de l'image acquise,
- p est la variable d'intégration,
- le symbole « * » désigne le produit de convolution circulaire entre les fonctions τ(θ) et Γ(θ),
f) puis, le calcul (30), en fonction de l'estimation des coefficients scalaires τₘ, d'un indice d'anisotropie qui caractérise l'anisotropie de l'image, cette indice variant de façon monotone en fonction de la dispersion statistique des valeurs de la fonction τ(θ) pour θ variant entre 0 et π.

## Patentansprüche

1. Verfahren zur Charakterisierung der Anisotropie der Textur eines digitalen Bilds, das aufweist:
a) die Erfassung (20) eines von Pixeln gebildeten digitalen Bilds, wobei jedes Pixel einer Lichtstärke und einer Position im Raum Z^{d} zugeordnet ist, wobei d eine natürliche ganze Zahl größer als oder gleich zwei ist;
b) die automatische Transformation (22) des erfassten Bilds, um ein transformiertes Bild I_{j,k} zu erhalten, wobei die Transformation die Anwendung einer Änderung T_{j,k} des Bilds aufweist, die jedes Pixel des erfassten Bilds um einen Winkel αⱼ von einer Position zu einer anderen um einen Punkt oder eine Achse dreht, und die das Bild um einen Faktor γₖ vergrößert oder verkleinert, wobei αⱼ = arg(uⱼₖ) und γₖ = |uⱼₖ|², wobei uⱼₖ ein Vektor ist, der die Änderung T_{j,k} vollständig charakterisiert, wobei die Indices j und k je und einmalig den Winkel αⱼ und den Faktor γₖ bestimmen,
dann, für jedes transformierte Bild, die Berechnung eines K-Inkrements V_{j,k}[m] für jedes Pixel einer Position m des transformierten Bilds, wobei dieses K-Inkrement durch Anwendung eines Faltungskerns v mittels der folgenden Formel berechnet wird: ${V}_{j , k} \left[m\right] = {\sum }_{p ∈ {\left[O, L\right]}^{d}} v \left[p\right] ⋅ Z \left[m-{T}_{j , k}⋅p\right]$ wobei
- das Produkt T_{j,k} · p der Anwendung der Änderung T_{j,k} an das Pixel entspricht, das anfangs die Position p im Bild I hatte;
- der Faltungskern v eine lineare Filterung durchführt und ein charakteristisches Polynom Qᵥ(z) und einen endlichen Träger [0,L]^{d} besitzt, wobei v[p] der Wert des Faltungskerns v für die Position p ist, wobei das charakteristische Polynom Qᵥ(z) durch die folgende Formel definiert wird: $∀ z ∈ {R}^{d} ⋅ {Q}_{v} \left(z\right) = {\sum }_{p ∈ {\left[0, L\right]}^{d}} v \left[p\right] {z}^{p}$
und die folgende Bedingung erfüllt: $∀ α ∈ {\left[0, K\right]}^{d} derart , dass \left|α\right| \leq K , dann \frac{{\partial }^{\left|α\right|} {Q}_{v}}{\partial {z}_{1}^{{a}_{1}} … \partial {z}_{d}^{{a}_{d}}} \left(1,…,1\right) = 0$ wobei :
- L ein erfasster Vektor von [0, N]^{d} ist, der den Kern v parametrisiert,
- N ein zu N^{d} gehörender Vektor ist, der die Größe des Bilds codiert und dessen Komponenten strikt positive natürliche ganze Zahlen sind;
- die Konstante K eine erfasste natürliche ganze Zahl ungleich Null ist;
- z ein Vektor von Komponenten z₁, z₂, ..., z_{d} ist,
- z^{p} das Monom z₁^{p1}*z₂^{p2}* ...*z_{d}^{pd} bezeichnet;
- ${\partial }^{\left|a\right|} {Q}_{v} / \partial {z}_{1}^{a 1} … \partial {z}_{d}^{ad}$ die teilweise Ableitung des Polynoms Qᵥ(z) bezüglich der Komponenten des Vektors z ist, wobei das Symbol $\partial {z}_{i}^{ai}$ eine Differentiation des Polynoms Qᵥ(z) der Ordnung aᵢ bezüglich der Variablen zᵢ anzeigt, wobei zᵢ die i-te Komponente des Vektors z und aᵢ die i-te Komponente des Vektors a bezeichnet, wobei i ein ganzzahliger Index größer als oder gleich 0 und kleiner als oder gleich d ist;
wobei der Schritt b) mit nⱼ verschiedenen Winkeln αⱼ und für jeden Winkel αⱼ mit mindestens zwei verschiedenen Faktoren γₖ ausgeführt wird, wobei nⱼ eine ganze Zahl größer als oder gleich zwei ist, um mindestens vier verschiedene transformierte Bilder I_{j,k} zu erhalten;
c) für jedes verschiedene transformierte Bild I_{j,k} die Berechnung (24) einer p-Variation W_{j,k} dieses transformierten Bilds ausgehend von den berechneten K-Inkrementen;
d) die Schätzung (26) der Terme βⱼ der folgenden statistischen Regression: $log \left(\left|{W}_{j , k}\right|\right) = log \left({\left|{u}_{jk}\right|}^{2}\right) ∗ H + {β}_{j} + {ε}_{j , k} ,$ wobei:
- H der Hurst-Exponent des erfassten Bilds ist;
- ε_{j,k} ein Fehlerterm der Regression ist, dessen statistische Eigenschaften vorbestimmt sind;
**dadurch gekennzeichnet, dass** das Verfahren ebenfalls aufweist:
e) die Schätzung (28) der skalaren Koeffizienten τₘ einer geraden Funktion τ(θ) definiert über [0; 2π], die das folgende Kriterium C minimiert: $C = {\sum }_{j = 1}^{{n}_{j}} {\left({β}_{j}-τ∗Γ\left({a}_{j}\right)\right)}^{2}$ wobei:
- βⱼ die im Schritt d) geschätzten Terme sind,
- τ(θ) die durch die folgende Beziehung für jeden Winkel θ definierte Funktion ist, der zu [0;2π] gehört: $τ \left(θ\right) = {\sum }_{m = 0}^{M} {τ}_{m} {f}_{m} \left(θ\right)$ wobei:
- M eine erfasste und konstante ganze Zahl größer als eins ist,
- τₘ die skalaren Koeffizienten der Funktion τ(θ) sind,
- fₘ(θ) die Funktionen einer Basis der π-periodischen Funktionen sind, die über das Intervall [0; 2π] definiert sind,
- Γ(θ) die durch die folgende Beziehung definierte Funktion ist: $Γ \left(θ\right) = {\int }_{ℝ +} {\left|\hat{v}\left(ρθ\right)\right|}^{2} {ρ}^{- 2 H - 1} d ρ$ wobei:
- *v̂* die diskrete Fourier-Transformation des Kerns v ist,
- H der Hurst-Exponent des erfassten Bilds ist,
- p die Integrationsvariable ist,
- das Symbol "*" das zirkulare Faltungsprodukt zwischen den Funktionen τ(θ) und Γ(θ) bezeichnet,
f) dann die Berechnung (30), abhängig von der Schätzung der skalaren Koeffizienten τₘ, eines Anisotropie-Index, der die Anisotropie des Bilds charakterisiert, wobei dieser Index abhängig von der statistischen Dispersion der Werte der Funktion τ(θ) für θ zwischen 0 und π variierend monoton variiert.

2. Verfahren nach Anspruch 1, wobei der im Schritt b) verwendete Kern v gleich dem Faltungsprodukt eines beliebigen Faltungskerns mit dem folgendermaßen definierten Kern ist: $v \left[p\right] = {\left(-1\right)}^{\left|p\right|} \times {C}_{{L}_{1}}^{{P}_{1}} \times … \times {C}_{{L}_{d}}^{{P}_{d}} = {\left(-1\right)}^{\left|p\right|} \times {\prod }_{l = 1}^{d} \frac{{L}_{i} !}{{p}_{i} ! \times \left({L}_{i}-{p}_{i}\right) !}$ wenn der Vektor p zu [0,L]^{d} gehört, und sonst v[p] = 0, wobei die Terme C^{p}L binomiale Koeffizienten bezeichnen, wobei die Konstante K dann gleich K = |*L*| -1 ist.

3. Verfahren nach Anspruch 2, wobei:
- die Funktionen fₘ die Funktionen der Fourier-Basis sind, und die Funktion τ(θ) durch die folgende Beziehung definiert wird: $τ \left(0\right) = {τ}_{0} + {\sum }_{m = 1}^{M} \left({τ}_{l , m}cos\left(2mθ\right)+{τ}_{2 , m}sin\left(2mθ\right)\right)$ wobei τ₀, τ_{1,m} und τ_{2,m} die skalaren Koeffizienten der Funktion τ(θ) sind,
- der Kern v durch die folgende Beziehung definiert wird: $v \left[p\right] = {\left(-1\right)}^{{p}_{1}} \frac{{L}_{1} !}{{p}_{1} ! \left({L}_{1}-{p}_{1}\right) !}$
- im Schritt e) (28) die Schätzung dieser Koeffizienten mit Hilfe der folgenden Beziehung berechnet wird: ${τ}^{∗} = {\left({L}^{T}L+λR\right)}^{- 1} {L}^{T} {β}_{_}$ wobei:
- τ* der Vektor (τ₀*, τ_{1,1}*, τ_{2,1}*, τ_{1,2}*, τ_{2,2}*, ···, τ_{1,M-1}*, τ_{2,M-1}*, τ_{1,M}*, τ_{2,M}*)^{T} ist, wobei die Koeffizienten τ₀*, τ_{1,1}*, τ_{2,1}*, τ_{1,2}*, τ_{2,2}*, ···, τ_{1,M-1}*, τ_{2,M-1}*, τ_{1,M}*, τ_{2,M}* die Schätzungen der Koeffizienten τ₀, τ_{1,1}, τ_{2,1}, τ_{1,2}, τ_{2,2}, ···, τ_{1,M-1}, τ_{2,M-1}, τ_{1,M}, τ_{2,M} sind,
- L die Matrix einer Abmessung nⱼ × (2M+1) ist, deren k-te Spalte durch die folgende Beziehung definiert wird:
(*µ̂*[0],*µ̂*[1]cos(*αₖ*),*µ̂*[1]sin(*αₖ*),...,*µ̂*[*M*]cos(*Mαₖ*),*µ̂*[*M*]sin(*Mαₖ*))
wobei *µ̂*[0],*µ̂*[1],...,*û*[*M*] die Koeffizienten der diskreten Fourier-Transformation der folgenden Funktion µ(θ) sind: *µ*(*θ*)=|cos(*θ*)|^{2*H*}, wobei H der Hurst-Exponent des erfassten Bilds ist,
- λ ein vorbestimmter Parameter ist,
- R eine Diagonalmatrix einer Abmessung (2M+1) × (2M+1) ist, deren Koeffizienten auf der Diagonalen in der Reihenfolge: 0, 2, 2, 5, 5, ···, (1+M²), (1+M²) sind,
- das Symbol "^{T}" die transponierte Funktion bezeichnet,
- β der Vektor (β₁, β₂, ···, βₙⱼ₋₁, βₙⱼ)^{T} ist.

4. Verfahren nach Anspruch 3, wobei das Verfahren aufweist:
- die Berechnung (28) eines Werts λ* definiert durch die folgende Beziehung: 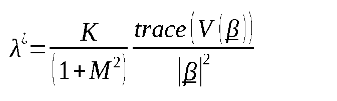 wobei:
- K gleich v₊/v₋ ist, wobei v₊ der größte Eigenwert der Matrix L^{T}L ist, und v₋ der kleinste Eigenwert der Matrix L^{T}L ist,
- trace(X) die Funktion ist, die die Summe der diagonalen Koeffizienten einer quadratischen Matrix X umdreht,
- V(β) die Kovarianzmatrix des Vektors β ist,
- |*β*|² die quadrierte euklidische Norm des Vektors β ist, und
- die automatische Wahl (28) des Parameters λ im Intervall [0; 1,3λ*] ist.

5. Verfahren nach einem der vorhergehenden Ansprüche, wobei der Anisotropie-Index ausgehend von der Summe der folgenden Abweichungen berechnet wird (30): ${\sum }_{j = 1}^{{n}_{j}} {\left|τ\left({a}_{j}\right)-{M}_{τ}\right|}_{Lp}$ wobei:
- M_{τ} eine Schätzung eines Mittelwerts der Funktion τ(θ) für θ zwischen 0 und π variierend ist,
- |...|*_{Lp}* die Norm L1, wenn Lp gleich 1 ist, die Norm L2, wenn Lp gleich zwei ist, und so weiter ist, wobei Lp strikt größer als Null ist.

6. Verfahren nach Anspruch 5, wobei der Anisotropie-Index A mit Hilfe der folgenden Beziehung berechnet wird (30): $A = \sqrt{{\sum }_{m = 1}^{M} \left({τ}_{1 , m}^{∗ 2}+{τ}_{2 , m}^{∗ 2}\right)}$

7. Verfahren nach einem der vorhergehenden Ansprüche, wobei:
- der Vektor uⱼₖ ein Vektor von Z²\{(0,0)} ist,
- die Änderung T_{j,k} aufweist:
- für d = 2 die folgende Matrixform: ${T}_{j , k} = {γ}_{k} \left[\begin{matrix}cos \left({α}_{j}\right) & - sin \left({α}_{j}\right) \\ sin \left({α}_{j}\right) & cos \left({α}_{j}\right)\end{matrix}\right]$
- und für d = 3 eine der folgenden Matrixformen oder eine Zusammensetzung dieser Matrixformen: ${T}_{j , k} = {γ}_{k} \left[\begin{matrix}cos \left({α}_{j}\right) & - sin \left({α}_{j}\right) & 0 \\ sin \left({α}_{j}\right) & cos \left({α}_{j}\right) & 0 \\ 0 & 0 & {y}_{k}\end{matrix}\right]$ ${T}_{j , k} = {γ}_{k} \left[\begin{matrix}cos \left({α}_{j}\right) & 0 & - sin \left({α}_{j}\right) \\ 0 & {y}_{k} & 0 \\ sin \left({α}_{j}\right) & 0 & cos \left({α}_{j}\right)\end{matrix}\right]$ ${T}_{j , k} = {γ}_{k} \left[\begin{matrix}{y}_{k} & 0 & 0 \\ 0 & cos \left({α}_{j}\right) & - sin \left({α}_{j}\right) \\ 0 & sin \left({α}_{j}\right) & cos \left({α}_{j}\right)\end{matrix}\right]$
wobei das transformierte Bild durch Multiplizieren der Koordinaten der Position jedes Pixels mit der Matrix T_{j,k} erhalten wird, und
- die Berechnung der K-Inkremente ausgehend nur von den Bildpixeln durchgeführt wird, die eine Position m einnehmen, die zu einer Einheit E gehört, wobei diese Einheit E nur Positionen m aufweist, die bereits im Bild I existieren, und die unabhängig von der Änderung T_{j,k} nach der Anwendung dieser Änderung T_{j,k} eine Position einnehmen, die auch bereits im Bild I existiert und für die die Position "m-T_{j,k}.p" eine Position einnimmt, die auch bereits im Bild I existiert; wobei das am Ende der Berechnung dieses K-Inkrements erhaltene transformierte Bild Ij_{,k} nur Pixel aufweist, deren Positionen zur Einheit E gehören.

8. Verfahren nach Anspruch 7, wobei die im Schritt c) berechneten p-Variationen gemäß der folgenden Formel berechnete quadratische Variationen sind: ${W}_{j , k} \left[m\right] = \frac{1}{{n}_{E}} {\sum }_{m ∈ E} {\left({V}_{j , k}\left[m\right]\right)}^{q}$ wobei q=2 und nE die Anzahl der Positionen sind, die zur Einheit E gehören.

9. Verfahren zur automatischen Klassifizierung digitaler Bildern abhängig von der Anisotropie ihrer Textur, wobei dieses Verfahren die Erfassung (40) einer Vielzahl von Bildern aufweist, die je von einer Vielzahl von Pixeln gebildet werden;
**dadurch gekennzeichnet, dass** es aufweist:
- die automatische Berechnung (42), für jedes der erfassten Bilder, eines Anisotropie-Index mittels eines Verfahrens nach einem der vorhergehenden Ansprüche, und
- die Klassifizierung (44) der erfassten digitalen Bilder mit Hilfe eines automatischen Klassifizierers abhängig vom für jedes der Bilder berechneten Anisotropie-Index.

10. Datenspeicherträger (16), **dadurch gekennzeichnet, dass** er Anweisungen zur Durchführung eines Verfahrens nach einem der vorhergehenden Ansprüche aufweist, wenn diese Anweisungen von einem elektronischen Rechner ausgeführt werden.

11. Elektronischer Rechner (14) zur Durchführung eines der Ansprüche 1 bis 9, wobei dieser Rechner programmiert ist, die folgenden Schritte auszuführen:
a) die Erfassung (20) eines von Pixeln gebildeten digitalen Bilds, wobei jedes Pixel einer Lichtstärke und einer Position im Raum Z^{d} zugeordnet ist, wobei d eine natürliche ganze Zahl größer als oder gleich zwei ist;
b) die automatische Transformation (22) des erfassten Bilds, um ein transformiertes Bild I_{j,k} zu erhalten, wobei die Transformation die Anwendung einer Änderung T_{j,k} des Bilds aufweist, die jedes Pixel des erfassten Bilds um einen Winkel αⱼ von einer Position zu einer anderen um einen Punkt oder eine Achse dreht, und die das Bild um einen Faktor γₖ vergrößert oder verkleinert, wobei αⱼ = arg(uⱼₖ) und γₖ = |uⱼₖ|², wobei uⱼₖ ein Vektor ist, der die Änderung T_{j,k} vollständig charakterisiert, wobei die Indices j und k je und einmalig den Winkel αⱼ und den Faktor γₖ bestimmen,
dann, für jedes transformierte Bild, die Berechnung eines K-Inkrements V_{j,k}[m] für jedes Pixel einer Position m eines transformierten Bilds, wobei dieses K-Inkrement durch Anwendung eines Faltungskerns v mittels der folgenden Formel berechnet wird: ${V}_{j , k} \left[m\right] = {\sum }_{p ∈ {\left[O, L\right]}^{d}} v \left[p\right] ⋅ Z \left[m-{T}_{j , k}⋅p\right]$ wobei:
- das Produkt T_{j,k} ·p der Anwendung der Änderung T_{j,k} an das Pixel entspricht, das anfangs die Position p im Bild I hatte;
- der Faltungskern v eine lineare Filterung durchführt und ein charakteristisches Polynom Qᵥ(z) und einen endlichen Träger [O,L]^{d} besitzt, wobei v[p] der Wert des Faltungskerns v für die Position p ist, wobei das charakteristische Polynom Qᵥ(z) durch die folgende Formel definiert wird: $∀ z ∈ {R}^{d} ⋅ {Q}_{v} \left(z\right) = {\sum }_{p ∈ {\left[O, L\right]}^{d}} v \left[p\right] {z}^{p}$
und die folgende Bedingung erfüllt: $∀ α ∈ {\left[0, K\right]}^{d} derart , dass \left|α\right| \leq K , dann \frac{{\partial }^{\left|α\right|} {Q}_{v}}{\partial {z}_{1}^{{a}_{1}} … \partial {z}_{d}^{{a}_{d}}} \left(1,…,1\right) = 0$ wobei:
- L ein erfasster Vektor von [0, N]^{d} ist, der den Kern v parametrisiert,
- N ein zu N^{d} gehörender Vektor ist, der die Größe des Bilds codiert und dessen Komponenten strikt positive natürliche ganze Zahlen sind;
- die Konstante K eine erfasste natürliche ganze Zahl ungleich Null ist;
- z ein Vektor von Komponenten z₁, z₂, ..., z_{d} ist;
- z^{P} das Monom z₁^{p1}*z₂^{p2}*...*z_{d}^{pd} bezeichnet;
- ${\partial }^{\left|a\right|} {Q}_{v} / \partial {z}_{1}^{a 1} … \partial {z}_{d}^{ad}$ die teilweise Ableitung des Polynoms Qᵥ(z) bezüglich der Komponenten des Vektors z ist, wobei das Symbol $\partial {z}_{i}^{ai}$ eine Differentiation des Polynoms Qᵥ(z) der Ordnung aᵢ bezüglich der Variablen zᵢ anzeigt, wobei zᵢ die i-te Komponente des Vektors z und aᵢ die i-te Komponente des Vektors a bezeichnet, wobei i ein ganzzahliger Index größer als oder gleich 0 und kleiner als oder gleich d ist;
wobei der Schritt b) mit nⱼ verschiedenen Winkeln αⱼ und für jeden Winkel αⱼ mit mindestens zwei verschiedenen Faktoren γₖ ausgeführt wird, wobei nⱼ eine ganze Zahl größer als oder gleich zwei ist, um mindestens vier verschiedene transformierte Bilder Ij_{,k} zu erhalten;
c) für jedes verschiedene transformierte Bild Ij_{,k} die Berechnung (24) einer p-Variation W_{j,k} dieses transformierten Bilds ausgehend von den berechneten K-Inkrementen;
d) die Schätzung (26) der Terme βⱼ der folgenden statistischen Regression: $log \left(\left|{W}_{j , k}\right|\right) = log \left({\left|{u}_{jk}\right|}^{2}\right) ∗ H + {β}_{j} + {ε}_{j , k} ,$ wobei:
- H der Hurst-Exponent des erfassten Bilds ist;
- ε_{j,k} ein Fehlerterm der Regression ist, dessen statistische Eigenschaften vorbestimmt sind;
**dadurch gekennzeichnet, dass** der Rechner ebenfalls programmiert ist, um die folgenden Schritte auszuführen:
e) die Schätzung (28) der skalaren Koeffizienten τₘ einer geradzahligen Funktion τ(θ) definiert über [0; 2π], die das folgende Kriterium C minimiert: $C = {\sum }_{j = 1}^{{n}_{j}} {\left({β}_{j}-τ∗Γ\left({a}_{j}\right)\right)}^{2}$ wobei:
- βⱼ die im Schritt d) geschätzten Terme sind,
- τ(θ) die durch die folgende Beziehung für jeden Winkel θ definierte Funktion ist, der zu [0;2π] gehört:
$τ \left(θ\right) = {\sum }_{m = 0}^{M} {τ}_{m} {f}_{m} \left(θ\right)$ wobei:
- M eine erfasste und konstante ganze Zahl größer als eins ist,
- τₘ die skalaren Koeffizienten der Funktion τ(θ) sind,
- fₘ(θ) die Funktionen einer Basis der π-periodischen Funktionen sind, die über das Intervall [0; 2π] definiert sind,
- Γ(θ) die durch die folgende Beziehung definierte Funktion ist: $Γ \left(θ\right) = {\int }_{ℝ +} {\left|\hat{v}\left(ρθ\right)\right|}^{2} {ρ}^{- 2 H - 1} d ρ$
wobei:
- *v̂* die diskrete Fourier-Transformation des Kerns v ist,
- H der Hurst-Exponent des erfassten Bilds ist,
- p die Integrationsvariable ist,
- das Symbol "*" das zirkulare Faltungsprodukt zwischen den Funktionen τ(θ) und Γ(θ) bezeichnet,
f) dann die Berechnung (30), abhängig von der Schätzung der skalaren Koeffizienten τ_{m,} eines Anisotropie-Index, der die Anisotropie des Bilds charakterisiert, wobei dieser Index abhängig von der statistischen Dispersion der Werte der Funktion τ(θ) für θ zwischen 0 und π variierend monoton variiert.

## Claims

1. Method for characterizing the anisotropy of the texture of a digital image, comprising:
a) acquiring (20) a digital image formed from pixels, each pixel being associated with a light intensity and with a position in space 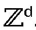 , where d is a natural integer higher than or equal to two;
b) automatically converting (22) the acquired image in order to obtain a converted image I_{j,k}, the conversion comprising applying a modification T_{j,k} of the image that makes each pixel of the acquired image rotate from one position to the next by an angle αⱼ about a point or an axis and that enlarges or shrinks the image by a factor γₖ, where αⱼ=arg(uⱼₖ) and γₖ = |uⱼₖ|², uⱼₖ being a vector that completely characterizes the modification T_{j,k}, the indices j and k uniquely identifying the angle αⱼ and the factor γₖ, respectively,
then, for each converted image, calculating a K-increment V_{j,k}[m] for each pixel of position m of the converted image, this K-increment being calculated by applying a convolution kernel v by means of the following formula: ${V}_{j , k} \left[m\right] = {\sum }_{p ∈ {\left[0, L\right]}^{d}} v \left[p\right] ⋅ Z \left[m-{T}_{j , k}⋅p\right]$ where:
- the product T_{j,k}.p corresponds to the application of the modification T_{j,k} to the pixel that initially had the position p in the image I;
- the convolution kernel v performs linear filtering and possesses a characteristic polynomial Qᵥ(z) and a finite support [0,L]^{d}, v[p] being the value of the convolution kernel v for the position p, the characteristic polynomial Qᵥ(z) being defined by the following formula: $∀ {zℝ}^{d} , {Q}_{v} \left(z\right) = {\sum }_{p ∈ {\left[0, L\right]}^{d}} v \left[p\right] {z}^{p}$
and meeting the following condition: $∀ a ∈ {\left[0, K\right]}^{d} such that \left|a\right| \leq K then \frac{{\partial }^{\left|a\right|} {Q}_{v}}{\partial {z}_{1}^{{a}_{1}} … \partial {z}_{d}^{{a}_{d}}} \left(1,…,1\right) = 0$ where:
- L is an acquired vector of [0, N]^{d} that parametrizes the kernel v,
- N is a vector belonging to 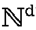 that codes the size of the image and the components of which are strictly positive natural integers;
- the constant K is a nonzero acquired natural integer;
- z is a vector of components z₁, z₂, ..., z_{d};
- z^{p} designates the monomial z₁^{p1}*z₂^{p2}*...*z_{d}^{pd};
- ∂^{|a|}Qᵥ/∂z₁^{a1}...∂z_{d}^{ad} is the partial derivative of the polynomial Qᵥ(z) with respect to the components of the vector z, the symbol ∂zᵢ^{ai} indicating a differentiation of the polynomial Qᵥ(z) of order aᵢ with respect to the variable zᵢ, where zᵢ is the i-th component of the vector z and aᵢ is the i-th component of the vector a, i being an integer index higher than or equal to 0 and lower than or equal to d;
the step b) being executed with nⱼ different angles αⱼ and, for each angle αⱼ, with at least two different factors γₖ, nⱼ being an integer higher than or equal to 2 so as to obtain at least four different converted images I_{j,k};
c) for each different converted image I_{j,k}, calculating (24) a p-variation W_{j,k} of this converted image from said calculated K-increments;
d) estimating (26) the terms βⱼ of the following statistical regression: $log \left(\left|{W}_{j , k}\right|\right) = log \left({\left|{u}_{jk}\right|}^{2}\right) * H + {β}_{j} + {ε}_{j , k} ,$ where:
- H is the Hurst exponent of the acquired image;
- ε_{j,k} is an error term of the regression the statistical properties of which are predetermined;
**characterized in that** the method also comprises:
e) estimating (28) the scalar coefficients τₘ of an even function τ(θ) defined in [0; 2π] that minimizes the following criterion C: $C = {\sum }_{j = 1}^{{n}_{j}} {\left({β}_{j}-τ∗Γ\left({α}_{j}\right)\right)}^{2}$ where:
- βⱼ are the terms estimated in step d),
- τ(θ) is the function defined by the following relationship for any angle θ belonging to [0; 2π]: $τ \left(θ\right) = {\sum }_{m = 0}^{M} {τ}_{m} {f}_{m} \left(θ\right)$ where:
- M is a constant integer number higher than an acquired datum,
- τₘ are the scalar coefficients of the function τ(θ),
- fₘ(θ) are the functions of a basis of π-periodic functions defined in the interval [0; 2π],
- Γ(θ) is the function defined by the following relationship: $Γ \left(θ\right) = {\int }_{ℝ +} {\left|\hat{v}\left(ρθ\right)\right|}^{2} {ρ}^{- 2 H - 1} d ρ$ where:
- *v̂* is the discrete Fourier transform of the kernel v,
- H is the Hurst exponent of the acquired image,
- p is the variable of integration,
- the symbol "*" designates the circular convolution of the functions τ(θ) and Γ(θ),
f) then, calculating (30), depending on the estimate of the scalar coefficients τₘ, an anisotropy index that characterizes the anisotropy of the image, this index varying monotonically as a function of the statistical dispersion of the values of the function τ(θ) for θ varying between 0 and π.

2. Method according to Claim 1, wherein the kernel v used in step b) is equal to the convolution of any convolution kernel and the kernel defined in the following way: $v \left[p\right] = {\left(-1\right)}^{\left|p\right|} \times {C}_{{L}_{1}}^{{P}_{1}} \times … \times {C}_{{L}_{d}}^{{P}_{d}} = {\left(-1\right)}^{\left|p\right|} \times {\prod }_{i = 1}^{d} \frac{{L}_{i} !}{{p}_{i} ! \times \left({L}_{i}-{p}_{i}\right) !}$ if the vector p belongs to [0,L]^{d} and v[p] = 0 if not, where the terms C^{p}_{L} are binomial coefficients, the constant K then being equal to K = |L| -1.

3. Method according to Claim 2, wherein:
- the functions fₘ are functions of the Fourier basis and the function τ(θ) is defined by the following relationship: $τ \left(θ\right) = {τ}_{0} + {\sum }_{m = 1}^{M} \left({τ}_{1 , m}cos\left(2mθ\right)+{τ}_{2 , m}sin\left(2mθ\right)\right)$ where τ₀, τ_{1,m} and τ_{2,m} are the scalar coefficients of the function τ(θ),
- the kernel v is defined by the following relationship: $v \left[p\right] = {\left(-1\right)}^{{p}_{1}} \frac{{L}_{1} !}{{p}_{1} ! \left({L}_{1}-{p}_{1}\right) !}$
- in step e) (28), the estimate of these coefficients is calculated using the following relationship: ${τ}^{∗} = {\left({L}^{T}L+λR\right)}^{- 1} {L}^{T} {β}_{_}$ where:
- τ* is the vector (τ₀*, τ_{1,1}*, τ_{2,1}*, τ_{1,2}*, τ_{2,2}*, ..., τ_{1,M-1}*, τ_{2,M-1}*, τ_{1,M}*, τ_{2,M}*)^{T}, the coefficients τ₀*, τ_{1,1}*, τ_{2,1}*, τ_{1,2}*, τ_{2,2}*, ..., τ_{1,M-1}*, τ_{2,M-1}*, τ_{1,M}*, τ_{2,M}* being the estimates of the coefficients τ₀, τ_{1,1}, τ_{2,1}, τ_{1,2}, τ_{2,2}, ..., τ_{1,M-1}, τ_{2,M-1}, τ_{1,M}, T2,M, respectively,
- L is the matrix of nⱼ x (2M+1) size the k-th column of which is defined by the following relationship:
(µ̂[0],µ̂[1]cos(α*ₖ*),µ̂[1]sin(α*ₖ*),...,µ̂[*M*]cos(*M* α*ₖ*),µ̂[*M*]sin(*M* α*ₖ*)) where µ̂[0],µ̂[1],...,µ̂[*M*] are the coefficients of the discrete Fourier transform of the function µ(θ) given by: µ(θ)=|cos(θ)|^{2*H*}, where H is the Hurst exponent of the acquired image,
- λ is a predetermined parameter,
- R is a diagonal matrix of (2M+1) x (2M+1) size the coefficients of which on the diagonal are, in order: 0, 2, 2, 5, 5, ..., (1+M²), (1+M²),
- the symbol ^{"T"} designates the transpose operation,
- β is the vector (β₁, β₂, ..., βₙⱼ₋₁, βₙⱼ)^{T}.

4. Method according to Claim 3, wherein the method comprises:
- calculating (28) a value λ* defined by the following relationship: ${λ}^{∗} = \frac{κ}{\left(1+{M}^{2}\right)} \frac{trace \left(V\left({β}_{_}\right)\right)}{{\left|{β}_{_}\right|}^{2}}$ where:
- κ is equal to v₊/v₋, v₊ and v₋ being the highest and the lowest eigenvalue of the matrix L^{T}L, respectively
- trace(X) is the function that returns the sum of the diagonal coefficients of a square matrix X,
- V(β) is the covariance matrix of the vector β,
- |β|² is the Euclidean norm to the power of two of the vector β, and
- automatically choosing (28) the parameter λ in the interval [0; 1.3λ*].

5. Method according to any one of the preceding claims, wherein the anisotropy index is calculated (30) from the sum of the following deviations: ${\sum }_{j = 1}^{{n}_{j}} {\left|τ\left({α}_{j}\right)-{M}_{τ}\right|}_{Lp}$ where:
- M_{τ} is an estimate of an average value of the function τ(θ) for θ varying between 0 and π,
- |...|_{Lp} is the norm L1 if Lp is equal to 1, the norm L2 if Lp is equal to 2 and so on, Lp being strictly higher than zero.

6. Method according to Claim 5, wherein the anisotropy index A is calculated (30) using the following relationship: $A = \sqrt{{\sum }_{m = 1}^{M} \left({τ}_{1 , m}^{∗ 2}+{τ}_{2 , m}^{∗ 2}\right)}$

7. Method according to any one of the preceding claims, wherein:
- the vector uⱼₖ is a vector of ${ℤ}^{2} \ \left\{\left(0,0\right)\right\} ,$
- the modification T_{j,k} has:
- for d = 2, the following matrix form: ${T}_{j , k} = {γ}_{k} \left[\begin{matrix}cos \left({α}_{j}\right) & - sin \left({α}_{j}\right) \\ sin \left({α}_{j}\right) & cos \left({α}_{j}\right)\end{matrix}\right]$
- and, for d = 3, one of the following matrix forms or a combination of these matrix forms: ${T}_{j , k} = {γ}_{k} \left[\begin{matrix}cos \left({α}_{j}\right) & - sin \left({α}_{j}\right) & 0 \\ sin \left({α}_{j}\right) & cos \left({α}_{j}\right) & 0 \\ 0 & 0 & {y}_{k}\end{matrix}\right]$ ${T}_{j , k} = {γ}_{k} \left[\begin{matrix}cos \left({α}_{j}\right) & 0 & - sin \left({α}_{j}\right) \\ 0 & {y}_{k} & 0 \\ sin \left({α}_{j}\right) & 0 & cos \left({α}_{j}\right)\end{matrix}\right]$ ${T}_{j , k} = {γ}_{k} \left[\begin{matrix}{y}_{k} & 0 & 0 \\ 0 & cos \left({α}_{j}\right) & - sin \left({α}_{j}\right) \\ 0 & sin \left({α}_{j}\right) & cos \left({α}_{j}\right)\end{matrix}\right]$ the converted image being obtained by multiplying the coordinates of the position of each pixel by the matrix T_{j,k}, and
- the K-increments are calculated using only those pixels of the image that occupy a position m belonging to a set E, this set E containing only those positions m that already exist in the image I and that, whatever the modification T_{j,k}, after application of this modification T_{j,k}, occupy a position that also already exists in the image I, and for which the position "m- T_{j,k}.p" occupies a position that also already exists in the image I; the converted image I_{j,k} obtained at the end of the calculation of this K-increment only containing pixels the positions of which belong to the set E.

8. Method according to Claim 7, wherein the p-variations calculated in step c) are quadratic variations calculated using the following formula: ${W}_{j , k} \left[m\right] = \frac{1}{{n}_{E}} {\sum }_{m ∈ E} {\left({V}_{j , k}\left[m\right]\right)}^{q}$ where q=2 and nE is the number of positions that belong to the set E.

9. Method for automatically classifying digital images depending on the anisotropy of their texture, this method comprising acquiring (40) a plurality of images each formed from a plurality of pixels;
**characterized in that** it comprises:
- automatically calculating (42), for each of the acquired images, a respective anisotropy index by means of a method according to any one of the preceding claims, and
- classifying (44) the acquired digital images using an automatic classifier, depending on the anisotropy index calculated for each of said images.

10. Data storage medium (16), **characterized in that** it comprises instructions for performing a method according to any one of the preceding claims, when these instructions are executed by a computer.

11. Computer (14) for implementing any one of Claims 1 to 9, this computer being programmed to execute the following steps:
a) acquiring (20) a digital image formed from pixels, each pixel being associated with a light intensity and with a position in space 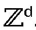 , where d is a natural integer higher than or equal to two;
b) automatically converting (22) the acquired image in order to obtain a converted image I_{j,k}, the conversion comprising applying a modification T_{j,k} of the image that makes each pixel of the acquired image rotate from one position to the next by an angle αⱼ about a point or an axis and that enlarges or shrinks the image by a factor γₖ, where αⱼ = arg(uⱼₖ) and γₖ = |uⱼₖ|², uⱼₖ being a vector that completely characterizes the modification T_{j,k}, the indices j and k uniquely identifying the angle αⱼ and the factor γₖ, respectively,
then, for each converted image, calculating a K-increment V_{j,k}[m] for each pixel of position m of the converted image, this K-increment being calculated by applying a convolution kernel v by means of the following formula: ${V}_{j , k} \left[m\right] = {\sum }_{p ∈ {\left[0, L\right]}^{d}} v \left[p\right] ⋅ Z \left[m-{T}_{j , k}⋅p\right]$ where:
- the product T_{j,k}.p corresponds to the application of the modification T_{j,k} to the pixel that initially had the position p in the image I;
- the convolution kernel v performs linear filtering and possesses a characteristic polynomial Qᵥ(z) and a finite support [0,L]^{d}, v[p] being the value of the convolution kernel v for the position p, the characteristic polynomial Qᵥ(z) being defined by the following formula:
$∀ {zℝ}^{d} , {Q}_{v} \left(z\right) = {\sum }_{p ∈ {\left[0, L\right]}^{d}} v \left[p\right] {z}^{p}$ and meeting the following condition: $∀ a ∈ {\left[0, K\right]}^{d} such that \left|a\right| \leq K then \frac{{\partial }^{\left|a\right|} {Q}_{v}}{\partial {z}_{1}^{{a}_{1}} … \partial {z}_{d}^{{a}_{d}}} \left(1,…,1\right) = 0$ where:
- L is an acquired vector of [0, N]^{d} that parametrizes the kernel v,
- N is a vector belonging to 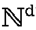 that codes the size of the image and the components of which are strictly positive natural integers;
- the constant K is a nonzero acquired natural integer;
- z is a vector of components z₁, z₂, ..., z_{d};
- z^{p} designates the monomial z₁^{p1}* z₂^{p2}*...*z_{d}^{pd};
- ∂^{|a|}Qᵥ/∂z₁^{a1}...∂z_{d}^{ad} is the partial derivative of the polynomial Qᵥ(z) with respect to the components of the vector z, the symbol ∂zᵢ^{ai} indicating a differentiation of the polynomial Qᵥ(z) of order aᵢ with respect to the variable zᵢ, where zᵢ is the i-th component of the vector z and aᵢ is the i-th component of the vector a, i being an integer index higher than or equal to 0 and lower than or equal to d;
the step b) being executed with nⱼ different angles αⱼ and, for each angle αⱼ, with at least two different factors γₖ, nⱼ being an integer higher than or equal to 2 so as to obtain at least four different converted images I_{j,k};
c) for each different converted image I_{j,k}, calculating (24) a p-variation W_{j,k} of this converted image from said calculated K-increments;
d) estimating (26) the terms βⱼ of the following statistical regression: $log \left(\left|{W}_{j , k}\right|\right) = log \left({\left|{u}_{jk}\right|}^{2}\right) * H + {β}_{j} + {ε}_{j , k} ,$ where:
- H is the Hurst exponent of the acquired image;
- ε_{j,k} is an error term of the regression the statistical properties of which are predetermined;
**characterized in that** the computer is also programmed to execute the following steps:
e) estimating (28) the scalar coefficients τₘ of an even function τ(θ) defined in [0; 2π] that minimizes the following criterion C: $C = {\sum }_{j = 1}^{{n}_{j}} {\left({β}_{j}-τ∗Γ\left({α}_{j}\right)\right)}^{2}$ where:
- βⱼ are the terms estimated in step d),
- τ(θ) is the function defined by the following relationship for any angle θ belonging to [0; 2π]: $τ \left(θ\right) = {\sum }_{m = 0}^{M} {τ}_{m} {f}_{m} \left(θ\right)$ where:
- M is a constant integer number higher than an acquired datum,
- τₘ are the scalar coefficients of the function τ(θ),
- fₘ(θ) are the functions of a basis of π-periodic functions defined in the interval [0; 2π],
- Γ(θ) is the function defined by the following relationship: $Γ \left(θ\right) = {\int }_{ℝ +} {\left|\hat{v}\left(ρθ\right)\right|}^{2} {ρ}^{- 2 H - 1} d ρ$ where:
- *v̂* is the discrete Fourier transform of the kernel v,
- H is the Hurst exponent of the acquired image,
- p is the variable of integration,
- the symbol "*" designates the circular convolution of the functions τ(θ) and Γ(θ),
f) then, calculating (30), depending on the estimate of the scalar coefficients τₘ, an anisotropy index that characterizes the anisotropy of the image, this index varying monotonically as a function of the statistical dispersion of the values of the function τ(θ) for θ varying between 0 and π.
